# EUROPÄISCHE PATENTSCHRIFT

(11) **EP 3 077 997 B1**
(45) Veröffentlichungstag und Bekanntmachung des Hinweises auf die Patenterteilung: **21.01.2026**
(21) Anmeldenummer: 14811812.8
(22) Anmeldetag: 04.12.2014
(51) Int. Cl.: H04W 12/082, H04L 9/06, H04L 9/08, H04L 9/32, H04L 9/00, H04W 4/80, H04W 56/00, G07F 17/12, G07C 9/00, G06Q 10/0836, G06Q 10/083, E05B 65/00, E05B 43/00, A47G 29/14, A47G 29/16

(54) **VERFAHREN ZUM BEWIRKEN EINER ÄNDERUNG EINES BETRIEBSMODUS**
METHOD FOR EFFECTING A CHANGE IN AN OPERATING MODE
PROCÉDÉ POUR INDUIRE UN CHANGEMENT DE MODE DE FONCTIONNEMENT

(30) Priorität: 05.12.2013 DE 102013113554; 11.04.2014 DE 102014105245
(43) Veröffentlichungstag der Anmeldung: 12.10.2016
(73) Patentinhaber: Deutsche Post AG, 53113 Bonn (DE)
(72) Erfinder: CARSTENS, Christian, 53578 Windhagen (DE); DAUTZ, Christoph, 53229 Bonn (DE); JANSEN, Jochen, 53113 Bonn (DE); BENZ, Ramin, 53229 Bonn (DE); EISENHART, Christian, 92445 Neukirchen-Balbini (DE)
(74) Vertreter: Cohausz & Florack
(86) Internationale Anmeldenummer: PCT/EP2014/076585
(87) Internationale Veröffentlichungsnummer: WO 2015/082621

(56) Entgegenhaltungen:
- EP-A1- 2 608 103
- WO-A2-2007/128319
- US-A1- 2002 161 501
- US-A1- 2012 280 783
- US-A1- 2013 176 107
- US-B2- 8 258 970

## Beschreibung

### Gebiet

Beispielhafte Ausführungsformen der Erfindung betreffen ein Verfahren zum Bewirken einer Änderung eines Betriebsmodus.

### Hintergrund

Zugangskontrollsysteme finden in vielerlei Hinsicht Anwendung, beispielsweise zur Kontrolle des Zugangs von Personen zu Räumen eines Gebäudes, wie es beispielsweise bei Hotels, Bürokomplexen oder Laboren der Fall ist, zu Veranstaltungen oder auch in abstrakter Form zu Funktionen, Ressourcen oder Diensten, beispielsweise von Computerfunktionen oder -ressourcen oder Serverdiensten.

Ein Nachteil elektronischer Zugangskontrollsysteme ist der hohe Engergieverbrauch dieser Systeme, da sie ständig in Bereitschaft sein müssen, um Zugang gewähren zu können.

Eine spezifische Anwendung von Zugangskontrollsystemen bildet auch die Kontrolle des Zugangs von Personen zu Öffnungen von Behältern, wie z.B. Schließfächern oder Warenzustellungsbehältern, insbesondere von Paketkästen. Paketkästen ermöglichen eine neuartige Form der Zustellung/Abholung von Paketen für Personen, die Pakete auch in Abwesenheit an oder in der Nähe ihres Wohnsitzes empfangen oder versenden wollen. Dazu werden Paketkästen üblicherweise vor dem Wohnsitz des Paketkastennutzers - ähnlich einem Briefkasten, aber mit größerem Fassungsvolumen - installiert und Pakete dann vom Zusteller durch Einlegen in den Paketkasten zugestellt oder durch Herausnehmen aus dem Paketkasten abgeholt. Um Missbrauch und Diebstahl zu verhindern, muss der Paketkasten über ein Schloss verfügen. Insbesondere in dieser spezifischen Anwendung ist der hohe Energieverbrauch elektronischer Zugangskontrollsysteme nachteilig, da solche Paketkästen häufig nachträglich angebracht werden und über keinen Anschluss an das Stromnetz verfügen, sondern batteriebetrieben sind.

### Zusammenfassung einiger beispielhafter Ausführungsformen der Erfindung

Die vorliegende Erfindung hat sich daher unter anderem die Aufgabe gestellt, diese Probleme zu überwinden.

Gemäß der Erfindung wird ein Verfahren offenbart, das folgendes umfasst: das Detektieren einer Präsenz einer Zugangsberechtigungsnachweisvorrichtung in einer Umgebung einer Zugangskontrollvorrichtung durch erste Kommunikationsmittel der Zugangskontrollvorrichtung, und das Bewirken, wenn die Präsenz der Zugangsberechtigungsnachweisvorrichtung in der Umgebung der Zugangskontrollvorrichtung detektiert wird, einer Änderung eines Betriebsmodus zweiter Kommunikationsmittel der Zugangskontrollvorrichtung.

Zum Beispiel ist das erfindungsgemäße Verfahren ein Verfahren zum Bewirken einer Änderung eines Betriebsmodus, zum Beispiel zum Ändern eines Betriebsmodus der ersten Kommunikationsmittel, der zweiten Kommunikationsmittel und/oder der Zugangskontrollvorrichtung. Zum Beispiel wird das erfindungsgemäße Verfahren zumindest teilweise von einer Zugangskontrollvorrichtung und/oder von jeweiligen Mitteln der Zugangskontrollvorrichtung ausgeführt und/oder gesteuert.

Gemäß der Erfindung wird des Weiteren eine Zugangskontrollvorrichtung offenbart, die folgendes umfasst: Mittel eingerichtet zur Ausführung des erfindungsgemäßen Verfahrens oder jeweilige Mittel zur Ausführung und/oder Steuerung der Schritte des erfindungsgemäßen Verfahrens. Zum Beispiel sind die Mittel der erfindungsgemäßen Zugangskontrollvorrichtung eingerichtet, das erfindungsgemäße Verfahren oder dessen Schritte auszuführen und/oder zu steuern. Ein oder mehrere der Schritte des erfindungsgemäßen Verfahrens können auch durch die gleichen Mittel ausgeführt und/oder gesteuert werden. Zum Beispiel umfasst die erfindungsgemäße Zugangskontrollvorrichtung die ersten Kommunikationsmittel und die zweiten Kommunikationsmittel. Beispielsweise können ein oder mehrere der Mittel zumindest teilweise durch einen oder mehrere Prozessoren gebildet sein.

Zum Beispiel umfasst die erfindungsgemäße Vorrichtung zumindest einen Prozessor und zumindest einen Speicher, der Programmcode beinhaltet, wobei der Speicher und der Programmcode eingerichtet sind, die Vorrichtung mit dem zumindest einen Prozessor dazu zu veranlassen, zumindest das erfindungsgemäße Verfahren auszuführen und/oder zu steuern. Dabei können entweder alle Schritte des erfindungsgemäßen Verfahrens gesteuert werden, oder alle Schritte des erfindungsgemäßen Verfahrens ausgeführt werden, oder ein oder mehrere Schritte gesteuert und ein oder mehrere Schritte ausgeführt werden.

Zum Beispiel ist die erfindungsgemäße Zugangskontrollvorrichtung eine Zugangskontrollvorrichtung für eine Aufnahmevorrichtung, insbesondere einen Paketkasten.

Gemäß der Erfindung wird des Weiteren eine Aufnahmevorrichtung offenbart, die folgendes umfasst: ein Gehäuse, zumindest eine Tür zum Verschließen zumindest einer Gehäuseöffnung, Verriegelungsmittel, die eingerichtet ist, die zumindest eine Tür zu verriegeln und zu entriegeln, und die erfindungsgemäße Zugangskontrollvorrichtung.

Gemäß der Erfindung wird des Weiteren ein System offenbart, das folgendes umfasst: die erfindungsgemäße Aufnahmevorrichtung und eine Zugangsberechtigungsnachweisvorrichtung.

Gemäß der Erfindung wird des Weiteren ein Computerprogramm offenbart, das folgendes umfasst: Programmanweisungen, die einen Prozessor zur Ausführung und/oder Steuerung des erfindungsgemäßen Verfahrens veranlassen, wenn das Computerprogramm auf dem Prozessor läuft.

Unter einem Prozessor sollen beispielsweise Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des erfindungsgemäßen Verfahrens gesteuert werden, oder alle Schritte des erfindungsgemäßen Verfahrens ausgeführt werden, oder ein oder mehrere Schritte gesteuert und ein oder mehrere Schritte ausgeführt werden. Das erfindungsgemäße Computerprogramm kann beispielsweise über ein Netzwerk wie das Internet, ein Telefon- oder Mobilfunknetz und/oder ein lokales Netzwerk verteilbar sein. Das erfindungsgemäße Computerprogramm kann zumindest teilweise Software und/oder Firmware eines Prozessors sein. Es kann gleichermaßen zumindest teilweise als Hardware implementiert sein. Das erfindungsgemäße Computerprogramm kann beispielsweise auf einem computerlesbaren Speichermedium gespeichert sein, z.B. einem magnetischen, elektrischen, elektromagnetischen, optischen und/oder andersartigen Speichermedium. Das Speichermedium kann beispielsweise Teil des Prozessors sein, beispielsweise ein (nicht-flüchtiger oder flüchtiger) Programmspeicher und/oder Arbeitsspeicher des Prozessors oder ein Teil davon.

Gemäß der Erfindung wird des Weiteren eine Verwendung offenbart, die folgendes umfasst: die Verwendung einer Zugangsberechtigungsnachweisvorrichtung in einer Umgebung der erfindungsgemäßen Zugangskontrollvorrichtung derart, dass die Präsenz der Zugangsberechtigungsnachweisvorrichtung in der Umgebung der Zugangskontrollvorrichtung durch erste Kommunikationsmittel der Zugangskontrollvorrichtung detektierbar ist, um das Bewirken einer Änderung eines Betriebsmodus zweiter Kommunikationsmittel der Zugangskontrollvorrichtung zu veranlassen.

Im Folgenden werden die Eigenschaften des erfindungsgemäßen Verfahrens, der erfindungsgemäßen Zugangskontrollvorrichtung, der erfindungsgemäßen Aufnahmevorrichtung, des erfindungsgemäßen Systems, des erfindungsgemäßen Computerprogramms und der erfindungsgemäßen Verwendung - teilweise beispielhaft - beschrieben.

Unter einer Zugangskontrollvorrichtung wie der erfindungsgemäßen Zugangskontrollvorrichtung soll beispielsweise eine Vorrichtung verstanden werden, an der eine Zugangskontrolle durchgeführt wird, beispielsweise wird dort der Zugang zu Räumen von Gebäuden (z.B. Hotels, Bürokomplexe, Labore) oder Vorrichtungen (z.B. Aufnahmevorrichtungen), zu Veranstaltungen (z.B. Konzerte, Sportveranstaltungen), zu Funktionen (beispielsweise eines Computers, z.B. über ein Login), zu Ressourcen oder zu Diensten (beispielsweise zu einem von einem Server bereitgestellten Dienst, z.B. Online-Banking, Soziale Netzwerke, Emailkonten) kontrolliert. Beispiele des Zugangs zu Räumen von Vorrichtungen sind der Zugang zu Aufnahmeräumen von Aufnahmevorrichtungen, wie z.B. Schließfächern, Spinden, Kühlschränken, Warenzustellbehältern, Briefkästen, Paketkästen, die beispielsweise jeweils mit Türen verschlossen und durch Verriegelungsmittel gesichert sind. Ein Paketkasten kann beispielsweise zumindest ein Aufnahmefach für Pakete aufweisen. Ferner kann ein Paketkasten beispielsweise mit einem Briefschlitz und gegebenenfalls mit einem Aufnahmefach für Briefe versehen sein.

Die Zugangskontrolle kann beispielsweise darin bestehen, dass anhand von vorgelegter Zugangsberechtigungsinformation entschieden wird, ob Zugang gewährt werden darf. Wenn entschieden wird, dass Zugang gewährt werden darf, wird beispielsweise Zugang gewährt, beispielsweise durch Absetzen eines Steuersignals, beispielsweise an ein Verriegelungsmittel, um beispielsweise eine Tür zu einem oder mehreren Räumen (z.B. Aufnahmeräumen einer Aufnahmevorrichtung) zu entriegeln und/oder zu öffnen, um den Zugang zu den ein oder mehreren Räumen zu ermöglichen.

Die Zugangskontrollvorrichtung kann beispielsweise ein oder mehrere Steuermittel umfassen. Zum Beispiel sind die Steuermittel mit den ersten Kommunikationsmitteln und/oder den zweiten Kommunikationsmitteln verbunden (z.B. operativ verbunden).

Zum Beispiel sind die ersten Kommunikationsmittel und die zweiten Kommunikationsmittel jeweils mit den Steuermitteln unmittelbar verbunden. Zum Beispiel sind die Verbindungen leitungsgebunden und ermöglichen die Übertragung (z.B. das Übermitteln oder Abfragen) von Informationen.

Zum Beispiel sind die Steuermittel eingerichtet, die Mittel der Zugangskontrollvorrichtung (z.B. die ersten und/oder die zweiten Kommunikationsmittel) und/oder eine oder mehrere Verriegelungsmittel einer Tür zumindest teilweise zu steuern und somit beispielsweise ein Entriegeln der Tür und/oder ein Verriegeln der Tür bewirken zu können. Ein Beispiel für solche Steuermittel sind ein oder mehrere Prozessoren.

Es ist beispielsweise auch denkbar, dass die Zugangskontrollvorrichtung, die Verriegelungsmittel umfasst.

Ein Beispiel für Verriegelungsmittel einer Tür ist ein elektronisch ansteuerbares Schloss und/oder eine elektronisch ansteuerbare Verriegelungseinheit. Zum Beispiel können die Steuermittel eingerichtet sein, ein solches Schloss zu steuern und somit beispielsweise ein Öffnen des Schlosses (d.h. ein Entriegeln der Tür) und/oder ein Schließen des Schlosses (d.h. ein Verriegeln der Tür) bewirken zu können. Die Verriegelungsmittel umfassen beispielsweise eine Falle oder eine Fallenfunktion, die eingerichtet ist, die Tür beim Schließen automatisch zu verriegeln. Zum Beispiel kann das elektronisch ansteuerbare Schloss mit einer solchen Falle ausgestattet sein, so dass die Steuermittel beispielsweise nur ein Öffnen des Schlosses steuern müssen, während ein Verriegeln des Schlosses manuell durch einen Nutzer geschieht, indem dieser die Falle nutzt und beispielsweise durch Zudrücken der Tür ein automatisches Verriegeln des Schlosses durch die Falle bewirkt. Zum Beispiel wird die Falle beim Öffnen des Schlosses zumindest zeitweise in eine Offen-Stellung (z.B. eine Entriegelungsposition und/oder ein Freigabeposition) überführt, beispielsweise durch einen elektrischen Motor, und nach dem Öffnen der Tür wird die Falle in eine Zu-Stellung (z.B. eine Verriegelungsposition und/oder eine Schließposition) überführt, beispielsweise durch eine Federbelastung. Beim Zudrücken der Tür wird die Falle aus der Zu-Stellung in die Offen-Stellung verdrängt und nach dem Beenden des Zudrückens kehrt die Falle automatisch wieder in die Zu-Stellung zurück, beispielsweise durch eine Federvorbelastung der Falle, so dass die geschlossene Tür verriegelt ist. Beispielsweise hat ein Schnappverschluss eine solche Fallenfunktion.

Die Zugangskontrollvorrichtung umfasst zum Beispiel ein oder mehrere elektrische Energiespeichermittel (z.B. eine Batterie, einen Akkumulator und/oder einen Kondensator). Beispielsweise wird die Zugangskontrollvorrichtung durch die Energiespeichermittel mit elektrischer Energie versorgt. Zum Beispiel wird die Zugangskontrollvorrichtung ausschließlich durch die Energiespeichermittel mit elektrischer Energie versorgt und/oder ist ausschließlich durch die Energiespeichermittel mit elektrischer Energie versorgbar. Zum Beispiel ist die Zugangskontrollvorrichtung batteriebetrieben und verfügt beispielsweise über keinen Stromanschluss, insbesondere keinen ständigen Stromanschluss (z.B. keinen ständigen Stromanschluss an ein Energieversorgungsnetz, z.B. keinen ständigen Stromanschluss an ein Wechselstromnetz).

Wie oben beschrieben, umfasst die Zugangskontrollvorrichtung beispielsweise die ersten Kommunikationsmittel und die zweiten Kommunikationsmittel. Die ersten Kommunikationsmittel und die zweiten Kommunikationsmittel sind beispielsweise jeweils eingerichtet, mit anderen Vorrichtungen zu kommunizieren und Nutzinformation an andere Vorrichtungen zu übertragen und/oder von anderen Vorrichtungen zu erhalten. Zum Beispiel sind die ersten Kommunikationsmittel und die zweiten Kommunikationsmittel eingerichtet, Zugangsberechtigungsinformation von einer Zugangsberechtigungsnachweisvorrichtung zu erhalten.

Die ersten Kommunikationsmittel und die zweiten Kommunikationsmittel sind voneinander verschiedene Kommunikationsmittel. Beispielsweise sind die ersten Kommunikationsmittel eingerichtet, gemäß einer ersten drahtlosen Kommunikationstechnik und/oder über ein erstes drahtloses Kommunikationsnetzwerk zu kommunizieren, und die zweiten Kommunikationsmittel sind eingerichtet gemäß einer zweiten (von der ersten verschiedenen) drahtlosen Kommunikationstechnik und/oder über ein zweites (von der ersten verschiedenes) drahtloses Kommunikationsnetzwerk zu kommunizieren.

Zum Beispiel sind die Kommunikationsmittel jeweils eingerichtet, eine Kommunikation zu steuern. Zum Beispiel umfassen die ersten und die zweiten Kommunikationsmittel jeweils eine Schaltung und/oder einen Prozessor, der eingerichtet ist, eine jeweilige Kommunikation zu steuern. Zum Beispiel umfassen die Kommunikationsmittel jeweils einen Prozessor, einen Arbeitsspeicher und einen Programmspeicher. Ein Beispiel für eine solche Schaltung ist der integrierte NFC Sendeempfänger CR95HF von ST Microelectronics. Zum Beispiel werden die ersten Kommunikationsmittel zumindest teilweise von dem integrierten NFC Sendeempfänger CR95HF von ST Microelectronics gebildet, auf dessen Datenblatt ausdrücklich Bezug genommen wird. Dieses Datenblatt ist unter www.st.com erhältlich (http://www.st.com/web /en/resource/technical/document/datasheet/DM00025644.pdf).

Zum Beispiel umfassen die ersten Kommunikationsmittel eine erste Kommunikationsschnittstelle und die zweiten Kommunikationsmittel eine zweite (von der ersten verschiedene) Kommunikationsschnittstelle. Beispielsweise ist die erste Kommunikationsschnittstelle eine Kommunikationsschnittstelle der ersten drahtlosen Kommunikationstechnik und/oder des ersten drahtlosen Kommunikationsnetzwerks und die zweite Kommunikationsschnittstelle ist beispielsweise eine Kommunikationsschnittstelle der zweiten drahtlosen Kommunikationstechnik und/oder des zweiten drahtlosen Kommunikationsnetzwerks. Ein Beispiel für die erste drahtlose Kommunikationstechnik und die zweite drahtlose Kommunikationstechnik ist Radio Frequency Identification (RFID) und/oder Near Field Communication (NFC) und/oder Bluetooth (z.B. Bluetooth Version 2.1 und/oder 4.0). RFID und NFC- sind beispielsweise gemäß den ISO-Standards 18000, 11784/11785 und dem ISO/IEC-Standard 14443-A und 15693 spezifiziert. Die Bluetooth-Spezifikationen sind unter www.bluetooth.org erhältlich.

Zum Beispiel sind die ersten Kommunikationsmittel eingerichtet, lediglich mit Vorrichtungen in der näheren Umgebung der Zugangskontrollvorrichtung (beispielsweise mit Vorrichtungen in einem Abstand von weniger als 50 cm, vorzugsweise weniger als 30 cm, besonders vorzugsweise weniger als 12 cm) zu kommunizieren. Zum Beispiel sind die zweiten Kommunikationsmittel eingerichtet, lediglich mit Vorrichtungen in der näheren Umgebung der Zugangskontrollvorrichtung (beispielsweise mit Vorrichtungen in einem Abstand von weniger als 100 m, vorzugsweise weniger als 20 m, besonders vorzugsweise weniger als 3 m) zu kommunizieren. Beispielsweise ist das erste Kommunikationsnetzwerk und/oder das zweite Kommunikationsnetzwerk ein sogenanntes Personal Area Network und/oder ein sogenanntes Piconet.

Durch das Vorsehen der ersten Kommunikationsmittel und der zweiten Kommunikationsmittel in der Zugangskontrollvorrichtung, kann die Zugangskontrollvorrichtung somit verschiedene Kommunikationstechniken unterstützen. Dies ist beispielsweise vorteilhaft, um eine hohe Kompatibilität mit bereits vorhandenen Vorrichtungen und Geräten zu ermöglichen (z.B. um diese vorhandenen Vorrichtungen und Geräte als Zugangsberechtigungsnachweisvorrichtung verwenden zu können).

Die Zugangskontrollvorrichtung kann ferner beispielsweise eine oder mehrere weitere Kommunikationsmittel umfassen. Zum Beispiel umfasst die Zugangskontrollvorrichtung weitere Kommunikationsmittel, die eingerichtet sind, gemäß einer drahtgebundenen Kommunikationstechnik und/oder über ein drahtgebundenes Kommunikationsnetzwerk zu kommunizieren. Ein Beispiel für ein drahtgebundenes Kommunikationsnetztechnik ist Univeral Serial Bus (USB) und/oder Firewire (IEEE 8594). Zum Beispiel umfasst die Zugangskontrollvorrichtung eine entsprechende weitere Kommunikationsschnittstelle. Zum Beispiel kann die Zugangskontrollvorrichtung über diese weitere Kommunikationsschnittstelle gewartet werden.

Die Zugangskontrollvorrichtung kann beispielsweise derart eingerichtet sein, dass sie (insbesondere ausschließlich) zur Kommunikation mit Zugangsberechtigungsnachweisvorrichtungen eingerichtet ist. Zum Beispiel sind die ersten und zweiten Kommunikationsmittel der Zugangskontrollvorrichtung eingerichtet, ausschließlich mit Zugangsberechtigungsnachweisvorrichtungen zu kommunizieren. Die Zugangskontrollvorrichtung verfügt beispielsweise über keinen Anschluss an ein Mobilfunknetz, ein Local Area Network (LAN), ein Wireless Local Area Network (WLAN) und/oder das Internet, sie stellt damit also beispielsweise eine "offline"-Zugangskontrollvorrichtung dar.

Die Zugangskontrollvorrichtung kann Bestandteil einer Vorrichtung sein, zu der sie den Zugang kontrolliert und der sie zugeordnet ist, beispielsweise einer Aufnahmevorrichtung wie der erfindungsgemäßen Aufnahmevorrichtung (z.B. einem Paketkasten).

Bei der Zugangsberechtigungsnachweisvorrichtung handelt es sich beispielsweise um ein tragbares elektronisches Gerät. Die Zugangsberechtigungsnachweisvorrichtung ist beispielsweise eingerichtet, mit den ersten Kommunikationsmitteln und/oder den zweiten Kommunikationsmitteln der Zugangskontrollvorrichtung zu kommunizieren. Zum Beispiel kann die Zugangsberechtigungsnachweisvorrichtung entsprechende Kommunikationsmittel umfassen, beispielsweise einen analogen Schaltkreis zum Senden und Empfangen (auch als Sendeempfänger oder Transceiver bezeichnet), eine Schaltung (z.B. einen digitalen Schaltkreis und/oder einen Prozessor) und einen Speicher (beispielsweise ein EEPROM - Electrically Erasable Programmable Read-Only Memory).

Die Zugangsberechtigungsnachweisvorrichtung ist beispielsweise als tragbares elektronisches Gerät gebildet und einem Nutzer zugeordnet, der sich mit der Zugangsberechtigungsinformation an der Zugangskontrollvorrichtung Zugang verschaffen möchte und wird daher nachfolgend als "Nutzergerät" bezeichnet. Das Nutzergerät umfasst beispielsweise Anzeigemittel wie eine graphische Benutzerschnittstelle und/oder Energieversorgungsmittel wie eine eigene Stromversorgung. Das Nutzergerät ist beispielsweise ein Mobiltelefon, ein Persönlicher Digitaler Assistent (PDA), ein Medienabspielgerät (z.B. ein iPod) und/oder ein Navigationsgerät. Wenn die Zugangskontrollvorrichtung einem Paketkasten zugeordnet ist, kann das Nutzergerät beispielsweise einem Paketkastennutzer, also beispielsweise einem Besitzer des Paketkastens, oder einer Person, die über den Paketkasten Pakete empfangen oder zur Abstellung durch einen Zusteller einlegen darf, gehören. Ein Zusteller wird in diesem Sinne nicht als Nutzer verstanden. Das Nutzergerät ist zum Beispiel zur drahtlosen Kommunikation mit der Zugangskontrollvorrichtung eingerichtet, beispielsweise gemäß der ersten Kommunikationstechnik und/oder der zweiten Kommunikationstechnik und/oder über das erste Kommunikationsnetzwerk und/oder das zweite Kommunikationsnetzwerk.

Alternativ kann es sich bei der Zugangsberechtigungsnachweisvorrichtung beispielsweise um ein tragbares elektronisches Gerät eines Zustellers handeln, insbesondere, wenn die Zugangskontrollvorrichtung einem Paketkasten zugeordnet ist. Dieses Gerät wird nachfolgend als "Zustellergerät" bezeichnet. Das Zustellergerät umfasst beispielsweise Anzeigemittel wie eine graphische Benutzerschnittstelle, Energieversorgungsmittel wie eine eigene Stromversorgung und Mittel zur drahtlosen Erfassung von Information von Paketen, beispielsweise durch optisches Scannen von Paketetiketten und/oder Erfassen von Informationen von Paketen über Funk (z.B. RFID) oder magnetische Felder (z.B. NFC), beispielsweise wenn das Paket einen RFID-Tag oder NFC-Tag aufweist. Das Zustellergerät ist zum Beispiel zur drahtlosen Kommunikation mit der Zugangskontrollvorrichtung eingerichtet, beispielsweise gemäß der ersten Kommunikationstechnik und/oder der zweiten Kommunikationstechnik und/oder über das erste Kommunikationsnetzwerk und/oder das zweite Kommunikationsnetzwerk. Ein Beispiel für ein Zustellergerät ist ein Handscanner, z.B. Honeywell's LXE Tecton MX7.

Alternativ kann es sich bei der Zugangsberechtigungsnachweisvorrichtung beispielsweise um eine tragbare elektronische Einheit zur drahtlosen Kommunikation mit der Zugangskontrollvorrichtung handeln. Diese tragbare elektronische Einheit wird nachfolgend als "Tag" bezeichnet. Der Tag kann beispielsweise keine Fähigkeit zur Kommunikation mittels zellularen Mobilfunks und/oder keine Fähigkeit zur Kommunikation mittels WLAN und/oder keine Fähigkeit zur Kommunikation mittels Bluetooth aufweisen. Der Tag kann beispielsweise keine Anzeigemittel wie eine graphische Benutzerschnittstelle und/oder keine Energieversorgungsmittel wie eine eigene Stromversorgung aufweisen. Der Tag kann beispielsweise nur bei Anliegen eines (z.B. elektromagnetischen, elektrischen oder magnetischen) Felds (z.B. eines Felds einer Kommunikationsschnittstelle wie einem Lesefeld eines Lesegeräts) kommunizieren. Bei dem Tag kann es sich beispielsweise um einen RFID- oder NFC-Tag (z.B. ein MiFARE DESFire von NXP) handeln. Der Tag kann beispielsweise unterschiedliche Formfaktoren aufweisen. Er kann beispielsweise als Schlüsselanhänger oder als Karte (z.B. etwa mit dem Formfaktor einer Kreditkarte) ausgebildet sein. Der Tag kann beispielsweise geringe Abmessungen (z.B. weniger als jeweils 9 cm oder 5 cm Höhe/Länge/Breite) und geringes Gewicht (z.B. weniger als 50g) aufweisen.

Es sind somit verschiedene Typen von Zugangsberechtigungsnachweisvorrichtung (z.B. Nutzergerät, Zustellergerät, Tag) denkbar, die zumindest teilweise verschiedene Kommunikationstechniken unterstützen. Zum Beispiel können verschiedene Personen oder Personengruppen verschiedene Zugangsberechtigungsnachweisevorrichtungen verwenden (z.B. um eine Zugangsberechtigungsinformation an eine Zugangskontrollvorrichtung zu kommunizieren).

Unter der erfindungsgemäßen Verwendung der Zugangsberechtigungsnachweisvorrichtung soll beispielsweise verstanden werden, dass ein Benutzer (z.B. ein Nutzer oder ein Zusteller) die Zugangsberechtigungsnachweisvorrichtung in die Umgebung der Zugangskontrollvorrichtung bringt (z.B. vor die Zugangskontrollvorrichtung hält, in die Umgebung der Zugangskontrollvorrichtung hält, in einem Abstand von weniger als 50 cm, vorzugsweise weniger als 30 cm besonders vorzugsweise weniger als 12 cm zur Zugangskontrollvorrichtung hält, etc.).

Zum Beispiel sind die ersten Kommunikationsmittel eingerichtet, zu detektieren, dass sich eine Zugangsberechtigungsnachweisvorrichtung in der Umgebung der Zugangskontrollvorrichtung befindet. Unter Detektieren einer Präsenz einer Zugangsberechtigungsnachweisvorrichtung in einer Umgebung der Zugangskontrollvorrichtung durch erste Kommunikationsmittel soll beispielsweise verstanden werden, dass die ersten Kommunikationsmittel feststellen, dass sich eine Zugangsberechtigungsnachweisvorrichtung zumindest mit einer hohen Wahrscheinlichkeit in der Umgebung der Zugangskontrollvorrichtung befindet.

Das Detektieren durch die ersten Kommunikationsmittel soll vorzugsweise ohne eine Kommunikation zwischen der Zugangskontrollvorrichtung und der Zugangsberechtigungsnachweisvorrichtung erfolgen. Zum Beispiel sind die ersten Kommunikationsmittel eingerichtet, zu detektieren, dass sich ein Gegenstand mit ferromagnetischen Eigenschaften (z.B. mit einer relativen Permeabilität größer als 1) in der Umgebung der Zugangskontrollvorrichtung befindet. Zum Beispiel hat eine Zugangsnachweisberechtigungsvorrichtung typischerweise ferromagnetische Eigenschaften (z.B. aufgrund der darin verwendeten metallischen Bauteile wie einer Antenne). Wird ein Gegenstand mit ferromagnetischen Eigenschaften in der Umgebung der Zugangskontrollvorrichtung detektiert, besteht in diesem Beispiel zumindest eine hohe Wahrscheinlichkeit, dass sich eine Zugangsnachweisberechtigungsvorrichtung in der Umgebung der Zugangskontrollvorrichtung befindet. Bei dem Detektieren kann somit gegebenenfalls auch eine Präsenz anderer Gegenstände in der Umgebung der Zugangskontrollvorrichtung detektiert werden. Die vorliegende Erfindung betrifft jedoch lediglich das Detektieren einer Zugangsberechtigungsnachweisvorrichtung in der Umgebung der Zugangskontrollvorrichtung, so dass vorliegend nur das Detektieren einer Zugangsberechtigungsnachweisvorrichtung in der Umgebung der Zugangskontrollvorrichtung beschrieben wird.

Unter der Umgebung der Zugangskontrollvorrichtung soll beispielsweise der die Zugangskontrollvorrichtung umgebende Raumbereich verstanden werden, in dem eine Präsenz einer Zugangsberechtigungsnachweisvorrichtung durch die ersten Kommunikationsmittel detektierbar ist. Die Umgebung der Zugangskontrollvorrichtung bzw. der die Zugangskontrollvorrichtung umgebende Raumbereich, in dem eine Präsenz einer Zugangsberechtigungsnachweisvorrichtung durch die ersten Kommunikationsmittel detektierbar ist, kann beispielsweise durch die Abnahme der Leistung eines von den ersten Kommunikationsmitteln erzeugten magnetischen, elektrischen und/oder elektromagnetischen Signals begrenzt sein. Ein solches Signal kann beispielsweise von einer Antenne abgestrahlt werden. Zum Beispiel ist die Umgebung der Zugangskontrollvorrichtung auf einen Raumbereich mit weniger als 50 cm, vorzugsweise weniger als 30 cm, besonders vorzugsweise weniger als 12 cm Abstand zu den ersten Kommunikationsmitteln (z.B. zu einer Antenne der ersten Kommunikationsmittel) beschränkt.

Unter Bewirken einer Änderung eines Betriebsmodus zweiter Kommunikationsmittel der Zugangskontrollvorrichtung soll beispielsweise verstanden werden, dass ein Wechsel (z.B. ein Übergang) des Betriebsmodus der zweiten Kommunikationsmittel von einem Betriebsmodus zu einem anderen Betriebsmodus veranlasst wird (z.B. durch die ersten Kommunikationsmittel und/oder die Steuermittel der Vorrichtung). Zum Beispiel sind die ersten Kommunikationsmittel und/oder die Steuermittel der Zugangskontrollvorrichtung eingerichtet, wenn eine Präsenz einer Zugangsberechtigungsnachweisvorrichtung (und/oder eines anderen Gegenstands) in der Umgebung der Zugangskontrollvorrichtung detektiert wird, ein Steuersignal an die zweiten Kommunikationsmittel zu kommunizieren, wobei das Steuersignal die zweiten Kommunikationsmittel veranlasst, den Betriebsmodus zu ändern. Beispiele für einen Betriebsmodus sind ein Aktivmodus, ein Energiesparmodus, ein Detektionsmodus, ein Ausmodus und/oder ein Schlafmodus.

Ein Aktivmodus ist beispielsweise ein Betriebsmodus, in dem zumindest alle Hauptfunktionen eines Mittels und/oder einer Komponente aktiv sind. Eine Hauptfunktion der ersten Kommunikationsmittel und der zweiten Kommunikationsmittel ist zum Beispiel die Kommunikationsfunktion. Zum Beispiel können die ersten Kommunikationsmittel und die zweiten Kommunikationsmittel nur im Aktivmodus mit anderen Vorrichtungen kommunizieren. Zum Beispiel ist die Zugangskontrollvorrichtung im Aktivmodus, wenn alle ihre Mittel und/oder Komponenten im Aktivmodus sind. Zum Beispiel ist die Zugangskontrollvorrichtung im Aktivmodus, wenn zumindest die Steuermittel der Zugangskontrollvorrichtung, die ersten Kommunikationsmittel und die zweiten Kommunikationsmittel im Aktivmodus sind.

Ein Energiesparmodus ist beispielsweise ein Betriebsmodus, in dem ein Mittel und/oder eine Komponente weniger Energie als im Aktivmodus verbraucht. Zum Beispiel sind zumindest einige Funktionen eines Mittels und/oder einer Komponente in dem Energiesparmodus reduziert und/oder deaktiviert. Ein Energiesparmodus ist beispielsweise ein Schlafmodus, ein Ausmodus und/oder ein Detektionsmodus. Im Detektionsmodus prüft ein Mittel und/oder eine Komponente beispielsweise in regelmäßigen und/oder unregelmäßigen Zeitabständen, ob eine vorgegebene Bedingung (z.B. eine Aufweckbedingung) erfüllt ist. Wenn die vorgegebene Bedingung (z.B. die Aufweckbedingung) erfüllt ist, wechselt das Mittel und/oder die Komponente beispielsweise den Betriebsmodus (z.B. aus dem Detektionsmodus in den Aktivmodus). Zum Beispiel ist das Detektieren einer Präsenz einer Zugangsberechtigungsnachweisvorrichtung in der Umgebung der Zugangskontrollvorrichtung eine solche Bedingung. Im Ausmodus ist ein Mittel und/oder eine Komponente beispielsweise vollständig deaktiviert (also "aus"). Der Wechsel aus einem Energiesparmodus in einen Aktivmodus kann auch als Aufwachen bezeichnet werden.

Zum Beispiel sind die ersten Kommunikationsmittel beim Detektieren in einem Detektionsmodus und die zweiten Kommunikationsmittel in einem Energiesparmodus (z.B. einem Ausmodus). Zum Beispiel Wechseln sowohl die ersten Kommunikationsmittel als auch die zweiten Kommunikationsmittel, wenn die Präsenz der Zugangsberechtigungsnachweisvorrichtung in der Umgebung der Zugangskontrollvorrichtung detektiert wird, in den Aktivmodus. Zum Beispiel ist die Zugangskontrollvorrichtung beim Detektieren in einem Energiesparmodus und wechselt, wenn die Präsenz der Zugangsberechtigungsnachweisvorrichtung in der Umgebung der Zugangskontrollvorrichtung detektiert wird, in den Aktivmodus.

Die vorliegende Erfindung ist beispielsweise vorteilhaft, da nur die ersten Kommunikationsmittel der Zugangskontrollvorrichtung für das Detektieren verwendet werden, um eine Bedingung für den Wechsel zumindest der zweiten Kommunikationsmittel aus einem Energiesparmodus in den Aktivmodus zu überwachen. Die ersten Kommunikationsmittel werden somit zusätzlich zum Kommunizieren (z.B. im Aktivmodus) auch als "Sensor" zum Überwachen einer Aufweckbedingung für die zweiten Kommunikationsmittel (z.B. im Detektionsmodus) verwendet. Die zweiten Kommunikationsmittel können somit im Energiesparmodus vollständig deaktiviert sein (z.B. im Ausmodus sein), so dass (im Vergleich zu dem Fall, dass die ersten Kommunikationsmittel und die zweiten Kommunikationsmittel für das Detektieren verwendet werden) Energie gespart werden kann. Dies ist insbesondere für batteriebetriebene Vorrichtungen vorteilhaft, um ein möglichst langes Austauschintervall bzw. eine lange Lebensdauer für die Batterie zu erreichen.

Weitere Vorteile der offenbarten Erfindung werden nachfolgend anhand beispielhafter Ausführungsformen beschrieben, deren Offenbarung für die jeweiligen Kategorien (Verfahren, Vorrichtung, System, Computerprogramm) gleichermaßen gelten soll.

Gemäß einer beispielhaften Ausführungsform der Erfindung sind die ersten Kommunikationsmittel eingerichtet, gemäß einer ersten Kommunikationstechnik drahtlos zu kommunizieren, und die zweiten Kommunikationsmittel sind gemäß dieser beispielhaften Ausführungsform der Erfindung eingerichtet, gemäß einer zweiten von der ersten verschiedenen Kommunikationstechnik drahtlos zu kommunizieren.

Zum Beispiel sind die für die Übertragung von Informationen verwendeten Frequenzen der ersten Kommunikationstechnik und der zweiten Kommunikationstechnik voneinander verschieden. Zum Beispiel werden gemäß der ersten Kommunikationstechnik Frequenzen von 20-855 kHz, 85,56 MHz oder 865-869 MHz zur Übertragung von Informationen verwendet. Zum Beispiel werden gemäß der zweiten Kommunikationstechnik Frequenzen von 2,402 bis 2,480 GHz zur Übertragung von Informationen verwendet.

Zum Beispiel sind die für die jeweilige Informationsübertragung verwendeten Signalformen der ersten Kommunikationstechnik und der zweiten Kommunikationstechnik voneinander verschieden. Zum Beispiel werden die Informationen gemäß der ersten Kommunikationstechnik induktiv durch magnetische Signale (z.B. über ein magnetisches Feld), kapazitiv durch elektrische Signale (z.B. über ein elektrisches Feld) oder durch elektromagnetische Signale (z.B. eine elektromagnetisch Welle) übertragen. Zum Beispiel werden gemäß der zweiten Kommunikationstechnik Informationen durch eine andere dieser Signalformen übertragen. Beispielsweise werden die Informationen gemäß der ersten Kommunikationstechnik induktiv durch magnetische Signale (z.B. über ein magnetisches Feld) und gemäß der zweiten Kommunikationstechnik durch elektromagnetische Signale (z.B. eine elektromagnetisch Welle) übertragen.

Zum Beispiel ist die erste Kommunikationstechnik eine aktiv-passiv Kommunikationstechnik. Bei einer aktiv-passiv Kommunikationstechnik kann ein passiver Kommunikationsteilnehmer von einem aktiven Kommunikationsteilnehmer mit Energie versorgt werden. Zum Beispiel erzeugt der aktive Kommunikationsteilnehmer ein magnetisches, elektrisches und/oder elektromagnetisches Feld, aus dem der passive Kommunikationsteilnehmer Energie entnehmen kann. Zum Beispiel erzeugen die ersten Kommunikationsmittel ein solches Feld (z.B. erzeugt eine Antenne der ersten Kommunikationsmittel ein solches Feld). Zum Beispiel ist die zweite Kommunikationstechnik eine aktiv-aktiv Kommunikationstechnik. Bei einer aktiv-aktiv Kommunikationstechnik versorgen sich die Kommunikationsteilnehmer jeweils selber mit Energie.

Zum Beispiel ist die erste Kommunikationstechnik eine Kommunikationstechnik gemäß einem ersten Kommunikationsstandard wie der NFC- oder der RFID-Spezifikation. Wie oben beschrieben, sind RFID und NFC beispielsweise gemäß den ISO-Standards 18000, 11784/11785 und dem ISO/IEC-Standard 14443-A und 15693 spezifiziert. Zum Beispiel ist die zweite Kommunikationstechnik eine Kommunikationstechnik gemäß einem zweiten von dem ersten verschiedenen Kommunikationsstandard wie der Bluetooth-Spezifikation. Die Bluetooth-Spezifikationen sind, wie oben beschrieben, unter www.bluetooth.org erhältlich.

Gemäß einer beispielhaften Ausführungsform der Erfindung ist die Zugangsberechtigungsnachweisvorrichtung eingerichtet, gemäß der zweiten Kommunikationstechnik drahtlos zu kommunizieren. Zusätzlich ist auch denkbar, dass die Zugangsberechtigungsnachweisvorrichtung eingerichtet ist, gemäß der ersten Kommunikationstechnik drahtlos zu kommunizieren. Alternativ kann die Zugangsberechtigungsnachweisvorrichtung auch eingerichtet sein, ausschließlich gemäß der zweiten Kommunikationstechnik drahtlos zu kommunizieren. Zum Beispiel umfasst die Zugangsberechtigungsnachweisvorrichtung entsprechende Kommunikationsmittel wie eine Kommunikationsschnittstelle.

Gemäß einer beispielhaften Ausführungsform der Erfindung wird das Detektieren in regelmäßigen Zeitabständen durchgeführt. Zum Beispiel wird das Detektieren in regelmäßigen Zeitabständen wiederholt. Zum Beispiel wird das Detektieren in einem Zeitabstand von 50 bis 5000 ms, vorzugsweise 200 bis 800 ms, besonders vorzugsweise 300 bis 500 ms regelmäßig wiederholt. Zum Beispiel wird das Detektieren alle 375 ms wiederholt. Es ist jedoch auch denkbar, dass das Detektieren in unregelmäßigen Zeitabständen durchgeführt wird.

Zum Beispiel wird das Detektieren in regelmäßigen oder unregelmäßigen Zeitabständen wiederholt, solange die ersten Kommunikationsmittel im Detektionsmodus sind. Zum Beispiel wird das Detektieren nicht wiederholt, solange die ersten Kommunikationsmittel in einem anderen Betriebsmodus, beispielsweise einem Aktivmodus sind. Zum Beispiel sind die ersten Kommunikationsmittel in den Zeitabständen zwischen dem Detektieren im Detektionsmodus inaktiv, so dass der Detektionsmodus besonders energiesparend ist. Durch die Länge der Zeitabstände kann dieser Energiespareffekt beeinflusst werden.

Gemäß einer beispielhaften Ausführungsform der Erfindung wird durch die Präsenz der Zugangsberechtigungsnachweisvorrichtung in der Umgebung der Zugangskontrollvorrichtung zumindest eine durch die ersten Kommunikationsmittel erfassbare physikalische Größe verändert. Zum Beispiel ist die physikalische Größe in dem Zustand, in dem die Zugangsberechtigungsnachweisvorrichtung in der Umgebung der Zugangskontrollvorrichtung präsent ist, gegenüber dem Zustand, in dem die Zugangsberechtigungsnachweisvorrichtung in der Umgebung der Zugangskontrollvorrichtung nicht präsent ist, verändert. Zum Beispiel wird die physikalische Größe alleine durch das Einbringen der Zugangsberechtigungsnachweisvorrichtung in die Umgebung der Zugangskontrollvorrichtung verändert. Wenn eine Veränderung dieser physikalischen Größe festgestellt wird, besteht somit eine zumindest hohe Wahrscheinlichkeit dafür, dass sich eine Zugangsberechtigungsnachweisvorrichtung in der Umgebung der Zugangskontrollvorrichtung befindet.

Zum Beispiel umfassen die ersten Kommunikationsmittel einen Sensor und/oder eine Messschaltung, die eingerichtet ist, die physikalische Größe zu messen und/oder eine Veränderung der physikalischen Größe zu erfassen. Ein Beispiel für eine von den ersten Kommunikationsmitteln erfassbare physikalische Größe ist beispielsweise eine Stromstärke eines Stroms (z.B. ein Sendestrom, ein Empfangsstrom und/oder ein Antennenstrom), eine Spannung (z.B. eine Sendespannung, eine Empfangsspannung und/oder eine Antennenspannung), eine Leistung (z.B. eine Sendeleistung und/oder eine Empfangsleistung), ein Widerstand (z.B. ein Strahlungswiderstand, Verlustwiderstand, Fußpunktwiderstand), eine magnetische Feldstärke und/oder eine elektrische Feldstärke.

Wie oben beschrieben, sind die ersten Kommunikationsmittel zum Beispiel eingerichtet, zu detektieren, dass sich ein Gegenstand mit ferromagnetischen Eigenschaften wie eine Zugangsberechtigungsnachweisvorrichtung in der Umgebung der Zugangskontrollvorrichtung befindet. Beispielsweise ist die von der Zugangskontrollvorrichtung erfassbare physikalische Größe durch einen Gegenstand mit ferromagnetischen Eigenschaften beeinflussbar.

Gemäß einer beispielhaften Ausführungsform der Erfindung ist die zumindest eine physikalische Größe eine Stromstärke eines Stroms einer Antenne der ersten Kommunikationsmittel beim Senden eines Signals und/oder beim Erzeugen eines elektrischen, magnetischen und/oder elektromagnetischen Felds. Zum Beispiel wird ein Widerstand der Antenne (z.B. ein Fußpunktwiderstand, ein Verlustwiderstand und/oder ein Strahlungswiderstand) verändert, wenn ein Gegenstand in die Umgebung der Zugangskontrollvorrichtung gebracht wird. Zum Beispiel wird beim Detektieren stets ein Signal mit gleicher Leistung gesendet, so dass sich der Strom der Antenne beim Senden des Signals verändert, wenn sich der Widerstand der Antenne (z.B. der Fußpunktwiderstand, der Verlustwiderstand und/oder der Strahlungswiderstand) ändert. Zum Beispiel ist der Strom der Antennenstrom beim Senden des Signals. Zum Beispiel ist der Strom der Treiberstrom beim Senden des Signals (z.B. der Treiberstrom einer Treiberschaltung für die Antennen). Zum Beispiel ist das Signal ein Burst-Signal. Es ist beispielsweise auch denkbar, dass statt der Stromstärke des Stroms der Antenne die Sendeleistung und/oder der Widerstand der Antenne beim Senden gemessen werden.

Unter einer Antenne soll beispielsweise jedes Bauelement verstanden, das geeignet ist, ein elektrisches Signal, ein magnetisches Signal und/oder ein elektromagnetisches Signal an die Umgebung abzugeben (z.B. abzustrahlen). Ein Bauelement zum Abstrahlen eines magnetischen Signals ist beispielsweise eine magnetische Antenne wie eine Leiterschleife (z.B. eine planare Leiterschleife) und/oder eine Spule (z.B. eine planare Spule). Ein Bauelement zum Abstrahlen eines elektromagnetischen Signals ist beispielsweise eine Patch-Antenne und/oder eine lineare Antenne wie eine Dipolantenne. Insbesondere soll auch ein Bauelement zum Erzeugen und/oder Abgeben eines NFC-Signals wie eine NFC-Antenne und/oder eine NFC-Spule als Antenne verstanden werden.

Diese Ausführungsform ist beispielsweise vorteilhaft, da Kommunikationsmittel normalerweise über eine Möglichkeit verfügen, um den Antennenstrom und/oder die Sendeleistung zu erfassen und zu überwachen, so dass keine oder nur geringfügige Änderungen an den Kommunikationsmitteln vorgenommen werden müssen, um zum Beispiel eine Stromstärke eines Stroms einer Antenne beim Senden eines Signals zu erfassen.

Gemäß einer beispielhaften Ausführungsform der Erfindung umfasst das Verfahren ferner das Erfassen der zumindest einen physikalischen Größe zum Detektieren einer Präsenz einer Zugangsberechtigungsnachweisvorrichtung in der Umgebung der Zugangskontrollvorrichtung (z.B. durch die ersten Kommunikationsmittel), und das Vergleichen eines die zumindest eine zum Detektieren erfasste physikalische Größe repräsentierenden Messwerts mit zumindest einem Kalibrierungswert (z.B. durch die ersten Kommunikationsmittel und/oder die Steuermittel der Zugangskontrollvorrichtung).

Wie oben beschrieben, umfassen die ersten Kommunikationsmittel zum Beispiel einen Sensor und/oder eine Messschaltung, die eingerichtet ist, die physikalische Größe (direkt oder indirekt) zu messen und/oder eine Veränderung der physikalischen Größe zu erfassen. Ein Beispiel für eine Messschaltung zum Messen eines Widerstands ist beispielsweise eine Messbrücke.

Ein Beispiel für eine von den ersten Kommunikationsmitteln erfassbare physikalische Größe ist beispielsweise eine Stromstärke eines Stroms (z.B. ein Sendestrom, ein Empfangsstrom und/oder ein Antennenstrom), eine Spannung (z.B. eine Sendespannung, eine Empfangsspannung und/oder eine Antennenspannung), eine Leistung (z.B. eine Sendeleistung und/oder eine Empfangsleistung), ein Widerstand (z.B. ein Strahlungswiderstand), eine magnetische Feldstärke und/oder eine elektrische Feldstärke.

Unter einem die physikalische Größe repräsentierenden Messwert soll beispielsweise ein quantisierter Messwert der gemessenen physikalischen Größe verstanden werden. Zum Beispiel umfassen die ersten Kommunikationsmittel einen Digital-Analog Wandler und/oder einen Analog-Digital Wandler, um die gemessene physikalische Größe zu quantisieren (z.B. einen 6-bit Digital-Analog Wandler und/oder einen 6-bit Analog-Digital Wandler). Beispielsweise umfassen die ersten Kommunikationsmittel einen sogenannten Nachlauf-Umsetzer, der unter anderem durch einen Digital-Analog Wandler und einen Komparator gebildet wird. Der Komparator des Nachlauf-Umsetzers vergleicht den Ausgangswert des Digital-Analog Wandler beispielsweise mit der gemessenen physikalischen Größe, wobei der Ausgangswert des Digital-Analog Wandlers schrittweise erhöht oder erniedrigt wird, bis eine minimale Abweichung zwischen dem Ausgangswert des Digital-Analog Wandler und der gemessenen physikalischen Größe gegeben ist.

Zum Beispiel repräsentiert der Kalibrierungswert einen Messwert der physikalischen Größe in dem Zustand, in dem die Zugangsberechtigungsnachweisvorrichtung in der Umgebung der Zugangskontrollvorrichtung nicht präsent ist. Durch das Vergleichen des die zumindest eine zum Detektieren erfasste physikalische Größe repräsentierenden Messwerts mit zumindest einem Kalibrierungswert kann somit bestimmt werden, ob sich die physikalische Größe gegenüber dem Zustand, in dem die Zugangsberechtigungsnachweisvorrichtung in der Umgebung der Zugangskontrollvorrichtung nicht präsent ist, verändert hat. Zum Beispiel sind die ersten Kommunikationsmittel und/oder die Steuermittel der Zugangskontrollvorrichtung eingerichtet, den die zumindest eine zum Detektieren erfasste physikalische Größe repräsentierenden Messwert mit dem zumindest einem Kalibrierungswert zu vergleichen.

Beispielsweise umfasst das Detektieren ferner das Bestimmen zumindest teilweise in Abhängigkeit des Ergebnis des Vergleichens, ob eine Zugangsberechtigungsnachweisvorrichtung in der Umgebung der Zugangskontrollvorrichtung präsent ist. Zum Beispiel wird bestimmt, dass eine Zugangsberechtigungsnachweisvorrichtung in der Umgebung der Zugangskontrollvorrichtung präsent ist, wenn die Abweichung des die zumindest eine zum Detektieren erfasste physikalische Größe repräsentierenden Messwerts von dem Kalibrierungswert einen Schwellwert überschreitet. Der Schwellwert kann beispielsweise vorgegeben sein oder gemäß einer vorgegebenen Regel bestimmt werden. Zum Beispiel sind die ersten Kommunikationsmittel und/oder die Steuermittel eingerichtet, in diesem Fall eine Präsenz einer Zugangsberechtigungsnachweisvorrichtung in der Umgebung der Zugangskontrollvorrichtung zu detektieren (z.B. zu bestimmen und/oder festzustellen). Alternativ kann beispielsweise auch vorgesehen sein, dass der die zumindest eine zum Detektieren erfasste physikalische Größe repräsentierende Messwert mit einem oberen Kalibrierungswert und einem unteren Kalibrierungswert verglichen wird. Zum Beispiel wird bestimmt, dass eine Zugangsberechtigungsnachweisvorrichtung in der Umgebung der Zugangskontrollvorrichtung präsent ist, wenn der die zumindest eine zum Detektieren erfasste physikalische Größe repräsentierende Messwert nicht zwischen dem unteren Kalibrierungswert und dem oberen Kalibrierungswert liegt. Zum Beispiel sind die ersten Kommunikationsmittel und/oder die Steuermittel eingerichtet, in diesem Fall eine Präsenz einer Zugangsberechtigungsnachweisvorrichtung in der Umgebung der Zugangskontrollvorrichtung zu detektieren (z.B. zu bestimmen und/oder festzustellen).

Gemäß einer beispielhaften Ausführungsform der Erfindung umfasst das Verfahren ferner das Kalibrieren der ersten Kommunikationsmittel für das Detektieren einer Präsenz einer Zugangsberechtigungsnachweisvorrichtung in der Umgebung der Zugangskontrollvorrichtung. Unter Kalibrieren der ersten Kommunikationsmittel für das Detektieren soll beispielsweise das Bestimmen des zumindest einen Kalibrierungswerts verstanden werden. Zum Beispiel ist der Kalibrierungswert unveränderlich und wird einmalig bei der Herstellung/Einrichtung der Zugangskontrollvorrichtung bestimmt. Zum Beispiel wird ein solcher unveränderlicher Kalibrierungswert durch einen Abgleich einer Messbrücke (z.B. durch Lasertrimmen eines Widerstands der Messbrücke) bei der Herstellung der Zugangskontrollvorrichtung dauerhaft vorgegeben. Zum Beispiel wird ein solcher unveränderlicher Kalibrierungswert bei der Einrichtung der Zugangskontrollvorrichtung bestimmt und in einem Speicher der ersten Kommunikationsmittel und/oder der Steuermittel dauerhaft gespeichert und somit vorgegeben. Es ist jedoch auch denkbar, dass der Kalibrierungswert veränderlich ist und dynamisch bestimmt wird (z.B. jedes Mal, wenn die ersten Kommunikationsmittel in den Detektionsmodus wechseln, z.B. vor dem Wechsel oder nach dem Wechsel oder während des Wechsels).

Gemäß einer beispielhaften Ausführungsform der Erfindung umfasst das Kalibrieren das Erfassen der zumindest einen physikalischen Größe durch die ersten Kommunikationsmittel zum Kalibrieren der ersten Kommunikationsmittel für das Detektieren, und das Bestimmen des zumindest einen Kalibrierungswerts zumindest teilweise in Abhängigkeit der zum Kalibrieren erfassten physikalischen Größe (z.B. durch die ersten Kommunikationsmittel und/oder die Steuermittel der Zugangskontrollvorrichtung).

Wie oben beschrieben, sind die ersten Kommunikationsmittel eingerichtet, die physikalische Größe zu erfassen. Zum Kalibrieren der ersten Kommunikationsmittel erfassen die ersten Kommunikationsmittel die physikalische Größe beispielsweise in einem Zustand, in dem die Zugangsberechtigungsnachweisvorrichtung in der Umgebung der Zugangskontrollvorrichtung nicht präsent ist (oder zumindest mit hoher Wahrscheinlichkeit nicht präsent ist). Zum Beispiel wird das Kalibrieren einmalig bei der Herstellung/Einrichtung der Zugangskontrollvorrichtung durchgeführt oder jedes Mal, wenn die ersten Kommunikationsmittel in den Detektionsmodus wechseln (z.B. vor dem Wechsel oder nach dem Wechsel oder während des Wechsels). Sowohl bei der Herstellung/Einrichtung als auch beim Wechsel in den Detektionsmodus wird angenommen, dass die Wahrscheinlichkeit, dass sich eine Zugangsberechtigungsnachweisvorrichtung in der Umgebung der Zugangskontrollvorrichtung befindet, gering ist.

Das Bestimmen des zumindest einen Kalibrierungswerts zumindest teilweise in Abhängigkeit der zum Kalibrieren erfassten physikalischen Größe durch die ersten Kommunikationsmittel umfasst beispielsweise das Quantisieren der erfassten physikalischen Größe. Außerdem kann das Bestimmen des zumindest einen Kalibrierungswerts zum Beispiel das Bestimmen eines oberen Kalibrierungswerts und eines unteren Kalibrierungswerts umfassen (z.B. durch Additionen bzw. Subtraktion eines Sicherheitswerts). Zum Beispiel sind die ersten Kommunikationsmittel und/oder die Steuermittel eingerichtet, den zumindest einen Kalibrierungswert zumindest teilweise in Abhängigkeit der zum Kalibrieren erfassten physikalischen Größe zu bestimmen.

Das Kalibrieren ist beispielsweise vorteilhaft, um Umgebungseinflüsse beim Detektieren auszublenden. Zum Beispiel kann durch das Kalibrieren der Einfluss eines ständig in der Umgebung der Zugangskontrollvorrichtung befindlichen Gegenstands mit ferromagnetischen Eigenschaften ausgeblendet werden. Wenn das Kalibrieren zum Beispiel bei jedem Wechsel in den Detektionsmodus durchgeführt wird, kann sogar der Einfluss eines zeitweise in der Umgebung der Zugangskontrollvorrichtung befindlichen Gegenstands (z.B. eines darauf abgelegten/vergessenen Schlüsselbunds) ausgeblendet werden.

Gemäß einer beispielhaften Ausführungsform der Erfindung wird das Kalibrieren lediglich einmal vor dem Detektieren und/oder lediglich einmal vor mehreren Wiederholungen des Detektierens durchgeführt wird) Wie oben beschrieben, wird das Kalibrieren zum Beispiel jedes Mal durchgeführt, wenn die ersten Kommunikationsmittel in den Detektionsmodus (und/oder die Zugangskontrollvorrichtung in den Energiesparmodus) wechseln. Zum Beispiel wird das Kalibrieren nur durchgeführt, wenn die ersten Kommunikationsmittel in den Detektionsmodus wechseln (und/oder die Zugangskontrollvorrichtung in den Energiesparmodus wechselt). Zum Beispiel wird das Kalibrieren vor dem Wechsel oder nach dem Wechsel oder während des Wechsels durchgeführt.

Gemäß einer beispielhaften Ausführungsform der Erfindung umfasst das Verfahren ferner das Erzeugen, wenn die Präsenz der Zugangsberechtigungsnachweisvorrichtung in der Umgebung der Zugangskontrollvorrichtung detektiert wird, einer Information über die Präsenz der Zugangsberechtigungsnachweisvorrichtung in der Umgebung der Zugangskontrollvorrichtung. Zum Beispiel erzeugen die ersten Kommunikationsmittel die Information.

Unter einer Information über die Präsenz der Zugangsberechtigungsnachweisvorrichtung in der Umgebung der Zugangskontrollvorrichtung soll beispielsweise jede Information verstanden werden, die einen Rückschluss darauf erlaubt, dass die die Präsenz der Zugangsberechtigungsnachweisvorrichtung in der Umgebung der Zugangskontrollvorrichtung detektiert wurde. Eine Information wird beispielsweise erzeugt, wenn ein die Information repräsentierender Wert in einem Speicher gespeichert wird (z.B. ein oder mehrere Bit in einem Register gesetzt werden).

Gemäß einer beispielhaften Ausführungsform der Erfindung umfasst das Verfahren ferner das Speichern der Information über die Präsenz der Zugangsberechtigungsnachweisvorrichtung in der Umgebung der Zugangskontrollvorrichtung in einem Speicher der ersten Kommunikationsmittel, und/oder das Übermitteln der Information über die Präsenz der Zugangsberechtigungsnachweisvorrichtung in der Umgebung der Zugangskontrollvorrichtung an Steuermittel der Zugangskontrollvorrichtung und/oder an die zweiten Kommunikationsmittel. Zum Beispiel wird die Information durch die ersten Kommunikationsmittel gespeichert und/oder übermittelt.

Zum Beispiel sind die ersten Kommunikationsmittel eingerichtet, eine Information über die Präsenz der Zugangsberechtigungsnachweisvorrichtung in der Umgebung der Zugangskontrollvorrichtung zu speichern. Zum Beispiel umfassen die ersten Kommunikationsmittel einen Speicher wie ein Register. Zum Beispiel sind die Steuermittel der Zugangskontrollvorrichtung und/oder die zweiten Kommunikationsmittel eingerichtet, zu prüfen, ob in dem Speicher der ersten Kommunikationsmittel eine Information über die Präsenz der Zugangsberechtigungsnachweisvorrichtung in der Umgebung der Zugangskontrollvorrichtung gespeichert ist. Zum Beispiel fragen die Steuermittel und/oder die zweiten Kommunikationsmittel den Speicher in regelmäßigen oder unregelmäßigen Zeitabständen ab.

Zum Beispiel sind die ersten Kommunikationsmittel eingerichtet, aus dem Detektionsmodus in einen Aktivmodus zu wechseln, wenn die Präsenz der Zugangsberechtigungsnachweisvorrichtung in der Umgebung der Zugangskontrollvorrichtung detektiert wird. Zum Beispiel sind die ersten Kommunikationsmittel ferner eingerichtet, eine Information über den Betriebsmodus der ersten Kommunikationsmittel in einem Register zu speichern. In diesem Beispiel kann (z.B. von den Steuermitteln und/oder den zweiten Kommunikationsmitteln) aus der Information über den Betriebsmodus der ersten Kommunikationsmittel auf die Detektion der Präsenz der Zugangsberechtigungsnachweisvorrichtung in der Umgebung der Zugangskontrollvorrichtung geschlossen werden, so dass die Information, dass der Betriebsmodus der ersten Kommunikationsmittel ein Aktivmodus ist, eine Information über die Präsenz der Zugangsberechtigungsnachweisvorrichtung in der Umgebung der Zugangskontrollvorrichtung ist. Zum Beispiel fragen die Steuermittel und/oder die zweiten Kommunikationsmittel das Register (und somit eine Information über die Präsenz der Zugangsberechtigungsnachweisvorrichtung in der Umgebung der Zugangskontrollvorrichtung) in regelmäßigen oder unregelmäßigen Zeitabständen ab. Zum Beispiel sind die Steuermittel und/oder die zweiten Kommunikationsmittel eingerichtet, das Register (und somit eine Information über die Präsenz der Zugangsberechtigungsnachweisvorrichtung in der Umgebung der Zugangskontrollvorrichtung) in regelmäßigen oder unregelmäßigen Zeitabständen abzufragen, wenn sie im Energiesparmodus sind.

Alternativ oder zusätzlich können die ersten Kommunikationsmittel auch eingerichtet sein, die Information über die Präsenz der Zugangsberechtigungsnachweisvorrichtung in der Umgebung der Zugangskontrollvorrichtung an die Steuermittel der Zugangskontrollvorrichtung und/oder an die zweiten Kommunikationsmittel zu übermitteln. Unter Übermitteln der Information soll beispielsweise verstanden werden, dass die ersten Kommunikationsmittel die Information an die Steuermittel und/oder die Zugangskontrollvorrichtung senden.

Gemäß einer beispielhaften Ausführungsform der Erfindung umfasst das Verfahren ferner das Erhalten von Zugangsberechtigungsinformation von der Zugangsberechtigungsnachweisvorrichtung durch die ersten Kommunikationsmittel und/oder die zweiten Kommunikationsmittel, das Entscheiden, ob Zugang gewährt werden darf, zumindest teilweise in Abhängigkeit der erhaltenen Zugangsberechtigungsinformation durch die Zugangskontrollvorrichtung, und das Gewähren des Zugangs, wenn entschieden wurde, dass Zugang gewährt werden darf.

An den ersten Kommunikationsmitteln und/oder den zweiten Kommunikationsmitteln wird beispielsweise Zugangsberechtigungsinformation erhalten, die an die Zugangskontrollvorrichtung kommuniziert wurde, insbesondere von einer Zugangsberechtigungsnachweisvorrichtung, auf der die Zugangsberechtigungsinformation zumindest zeitweise gespeichert ist. Die Zugangsberechtigungsinformation kann beispielsweise gemäß einer drahtlosen Kommunikationstechnik an die Zugangskontrollvorrichtung kommuniziert werden, beispielsweise gemäß RFID, NFC oder Bluetooth.

Zum Beispiel sind die ersten Kommunikationsmittel und/oder die zweiten Kommunikationsmittel eingerichtet, die Zugangsberechtigungsinformation von der Zugangsberechtigungsnachweisvorrichtung zu erhalten. Zum Beispiel sind die ersten Kommunikationsmittel und/oder die zweiten Kommunikationsmittel eingerichtet, die Zugangsberechtigungsinformation von der Zugangsberechtigungsnachweisvorrichtung zu erhalten, wenn sie in einem Aktivmodus sind. Beispielsweise können die ersten Kommunikationsmittel und/oder die zweiten Kommunikationsmittel nur in dem Aktivmodus die Zugangsberechtigungsinformation von der Zugangsberechtigungsnachweisvorrichtung erhalten. Zum Beispiel kommuniziert die Zugangsberechtigungsnachweisvorrichtung die Zugangsberechtigungsinformation an die ersten Kommunikationsmittel gemäß der ersten Kommunikationstechnik und/oder an die zweiten Kommunikationsmittel gemäß der zweiten Kommunikationstechnik.

Unter Entscheiden, ob Zugang gewährt werden darf, soll beispielsweise verstanden werden, dass geprüft wird, ob die erhaltene Zugangsberechtigungsinformation zum Zugang berechtigt. Zum Beispiel sind die Steuermittel der Zugangskontrollvorrichtung eingerichtet, zu prüfen, ob die erhaltene Zugangsberechtigungsinformation zum Zugang berechtigt. Zum Beispiel sind die Steuermittel der Zugangskontrollvorrichtung eingerichtet, zu prüfen, ob die erhaltene Zugangsberechtigungsinformation zum Zugang berechtigt, wenn sie in einem Aktivmodus sind.

Die Zugangsberechtigungsinformation ist beispielsweise als Information zu verstehen, die im Rahmen einer durch die Zugangskontrollvorrichtung durchgeführten Prüfung, ob einer Entität Zugang gewährt werden darf, ausgewertet wird. Die Prüfung der Zugangsberechtigungsinformation muss nicht die einzige Prüfung im Rahmen der Zugangskontrolle sein, es können beispielsweise weitere notwendige Bedingungen erforderlich sein, damit Zugang gewährt werden darf. Beispiele für Zugangsberechtigungsinformation sind beispielsweise ein Code oder Schlüssel, der an die Zugangskontrollvorrichtung kommuniziert wird und mit einem in der Zugangskontrollvorrichtung hinterlegten Code oder Schlüssel verglichen wird, um bei Übereinstimmung zu entscheiden, dass Zugang gewährt werden darf. Der Code oder Schlüssel kann gegen Ausspähung zusätzlich gesichert sein, beispielsweise durch Verschlüsselung. Der Code oder Schlüssel kann beispielsweise dauerhaft verwendet werden, oder kann in regelmäßigen oder unregelmäßigen Abständen geändert werden. Beispielsweise kann nach einer vordefinierten Vorschrift nach zeitlichen Vorgaben (z.B. jeden Tag) oder bei jeder Benutzung eines Codes ein neuer Code erzeugt werden. Dies kann sowohl in der Zugangskontrollvorrichtung als auch in der Zugangsberechtigungsnachweisvorrichtung erfolgen, damit beide jeweils korrespondierende Paare von Codes oder Schlüssel aufweisen, oder in der Zugangskontrollvorrichtung und in einer Einheit, von der die Zugangsberechtigungsnachweisvorrichtung den Code oder Schlüssel erhält.

Eine alternative beispielhafte Form von Zugangsberechtigungsinformation ist beispielsweise in der EP 1 024 239 A1 beschrieben, in der die Zugangsberechtigungsinformation als Zugangstoken tᵢⱼ ausgebildet ist, der Zugangsrechte aᵢⱼ definiert, beispielsweise in der Form: "Gewähre Nutzer uᵢ Zugang zu Schloss lⱼ bis 1/2/2001". Die Zugangsrechte werden dann an ein Schloss übertragen und gegengeprüft. Es wird also beispielsweise geprüft, ob es sich um den Nutzer uᵢ handelt, der den Zugangstoken vorlegt, ob der Zugangstoken für das Schloss lⱼ gilt und ob der Gültigkeitszeitraum "bis 1/2/2001" des Schlosses noch nicht abgelaufen ist. Zusätzlich können die Zugangsrechte aᵢⱼ mit einem Nachrichtenauthentisierungscode (Message Authentication Code, MAC) versehen werden, beispielsweise ein HMAC nach Request for Comments (RFC) Dokument 2104. Der MAC basiert auf einem Schlüssel sⱼ, der sowohl an einer Einheit, die den Zugangstoken erzeugt, als auch im Schloss bekannt ist. Der Zugangstoken tᵢⱼ umfasst dann den HMAC und die Zugangsrechte aᵢⱼ, beispielsweise konkateniert. Das Schloss kann dann anhand des empfangenen MACs, der empfangenen Zugangsrechte aᵢⱼ und des Schlüssels sⱼ die Authentizität des Zugangstokens bestätigen und dann die Zugangsrechte aᵢⱼ prüfen. Alternativ können die Zugangsrechte gemäß der EP 1 024 239 A1 auch wie folgt definiert werden: "Gewähre dem Nutzer, der k kennt, Zugang zu Schloss lj bis 1/1/2001". Der Nutzer muss dann sowohl über den Zugangstoken tᵢⱼ als auch über das Wissen über k (ein Schlüssel) verfügen, um Zugang am Schloss lⱼ zu erhalten, und bekommt beides (beispielsweise in verschlüsselter Form) von einer Einheit, die den Token erzeugt, zur Verfügung gestellt.

Zum Beispiel wird Zugang gewährt, indem das Entriegeln einer Tür oder mehrerer Türen einer Aufnahmevorrichtung (z.B. eines Paketkastens) bewirkt wird. Zum Beispiel können die Steuermittel eingerichtet sein, das Schloss zu steuern und somit beispielsweise ein Öffnen des Schlosses (d.h. ein Entriegeln der Tür) und/oder ein Schließen des Schlosses (d.h. ein Verriegeln der Tür) bewirken zu können.

Zum Beispiel kann ein Benutzer eines Paketkastens (z.B. ein Nutzer oder ein Zusteller) zum Öffnen einer Tür des Paketkastens, eine Zugangsberechtigungsnachweisvorrichtung (z.B. ein Nutzergerät, ein Zustellergerät und/oder einen Tag) in die Umgebung der ersten Kommunikationsmittel halten. Wie oben beschrieben, kann dann beispielsweise zunächst ein Wechsel der Zugangskontrollvorrichtung in einen Aktivmodus bewirkt werden, wenn die ersten Kommunikationsmittel die Präsenz der Zugangsberechtigungsnachweisvorrichtung detektieren. Anschließend können beispielsweise die ersten Kommunikationsmittel eine Zugangsberechtigungsinformation von der Zugangsberechtigungsnachweisvorrichtung erhalten. Es ist jedoch auch denkbar, dass anschließend beispielsweise die zweiten Kommunikationsmittel eine Zugangsberechtigungsinformation von der Zugangsberechtigungsnachweisvorrichtung erhalten. Wenn die Zugangsberechtigungsinformation zum Zugang berechtigt, wird die Tür des Paketkastens dann beispielsweise entriegelt und kann vom Benutzer geöffnet werden. Der Benutzer veranlasst in diesem Beispiel somit durch die Verwendung der Zugangsberechtigungsnachweisvorrichtung in der Umgebung der ersten Kommunikationsmittel sowohl das Ändern des Betriebsmodus der Zugangskontrollvorrichtung als auch das Entriegeln der Tür des Paketkastens.

Gemäß einer beispielhaften Ausführungsform der Erfindung umfasst das Verfahren ferner das Messen (z.B. durch die Steuermittel der Zugangskontrollvorrichtung) der Zeit seit zumindest ein von der Zugangskontrollvorrichtung erfasstes Ereignis stattgefunden hat, und das Bewirken, wenn die Tür geöffnet ist und die gemessene Zeit einen vorgegebenen Deaktivierungszeitschwellwert überschreitet, des Deaktivierens des Verriegelns der Tür (z.B. durch die Steuermittel der Zugangskontrollvorrichtung) derart, dass die Tür nicht verriegelbar ist.

Zum Beispiel ist das zumindest eine von der Zugangskontrollvorrichtung erfasste Ereignis ein Detektieren einer Präsenz der Zugangsberechtigungsnachweisvorrichtung in der Umgebung der Zugangskontrollmittel, das Empfangen von Zugangsberechtigungsinformation von einer Zugangsberechtigungsnachweisvorrichtung, das Bewirken des Entriegelns zumindest einer Tür und/oder das Öffnen zumindest einer Tür. Zum Beispiel umfasst die Zugangskontrollvorrichtung einen Sensor und/oder eine Sensorschaltung, die eingerichtet ist, ein solches Ereignis zu erfassen. Ein Beispiel für einen Sensor ist ein Hallsensor, ein Türöffnungssensor, eine Lichtschranke, die ersten Kommunikationsmittel und/oder die zweiten Kommunikationsmittel.

Zum Beispiel umfasst die Zugangskontrollvorrichtung Zeitmessmittel zum Messen der Zeit (z.B. eine Timerschaltung und/oder eine Timerfunktion, beispielsweise eine Timerschaltung und/oder eine Timerfunktion der Steuermittel).

Unter dem Deaktivieren des Verriegelns der Tür soll beispielsweise verstanden werden, dass die Tür nicht verriegelbar ist (also von Innen und von Außen geöffnet werden kann, z.B. durch Drücken gegen die Tür oder Ziehen an der Tür geöffnet werden kann). Zum Beispiel wird das Deaktivieren des Verriegelns der Tür durch die Steuermittel der Zugangskontrollvorrichtung bewirkt. Wie oben beschrieben, können zum Beispiel die Steuermittel der Zugangskontrollvorrichtung ein Schloss der Tür steuern. Zum Beispiel können die Steuermittel das Schloss steuern, eine Falle des Schlosses in eine Offen-Stellung zu überführen, so dass die Falle die Tür beim Schließen nicht mehr automatisch verriegelt. Solange sich die Falle in der Offen-Stellung befindet, ist das Verriegeln der Tür somit beispielsweise deaktiviert. Eine andere Möglichkeit zum Deaktivieren des Verriegelns der Tür ist beispielsweise das Blockieren der Falle derart, dass die Falle aus der Zu-Stellung nicht in die Offen-Stellung überführt werden kann.

Der Zeitschwellwert ist beispielsweise derart gewählt, dass die Wahrscheinlichkeit, dass sich der Benutzer (z.B. der Nutzer/Zusteller) noch in der Nähe der Zugangskontrollvorrichtung befindet, der die Tür geöffnet hat, gering ist. Durch das Deaktivieren des Verriegelns der Tür zu diesem Zeitpunkt kann somit verhindert werden, dass die Tür unbeaufsichtigt und/oder unbeabsichtigt verriegelt wird (z.B. von spielenden Kindern).

Gemäß einer beispielhaften Ausführungsform der Erfindung umfasst das Verfahren ferner das Bewirken eines Wechsels des Betriebsmodus der ersten Kommunikationsmittel, der zweiten Kommunikationsmittel und/oder der Zugangskontrollvorrichtung aus einem Energiesparmodus in einen Aktivmodus, wenn die Präsenz der Zugangsberechtigungsnachweisvorrichtung in der Umgebung der Zugangskontrollvorrichtung detektiert wird.

Zum Beispiel sind die Steuermittel der Zugangskontrollvorrichtung eingerichtet, einen Wechsel des Betriebsmodus der ersten Kommunikationsmitte, der zweiten Kommunikationsmittel und/oder der Steuermittel (z.B. insbesondere der zweiten Kommunikationsmittel und der Steuermittel) zu bewirken, wenn die Präsenz der Zugangsberechtigungsnachweisvorrichtung in der Umgebung der Zugangskontrollvorrichtung detektiert wird. Beispielsweise wird die gesamte Zugangskontrollvorrichtung, mit oder ohne die ersten Kommunikationsmittel, aufgeweckt.

Gemäß einer beispielhaften Ausführungsform der Erfindung umfasst das Verfahren ferner das Messen (z.B. durch die Steuermittel der Zugangskontrollvorrichtung) der Aktivzeit seit zumindest ein von der Zugangskontrollvorrichtung erfasstes Ereignis stattgefunden hat, und das Bewirken, wenn die gemessene Aktivzeit einen vorgegebenen Aktivzeitschwellwert überschreitet, eines Wechsels des Betriebsmodus der ersten Kommunikationsmittel, der zweiten Kommunikationsmittel und/oder der Zugangskontrollvorrichtung aus dem Aktivmodus in den Energiesparmodus.

Wie oben beschrieben, ist das zumindest eine von der Zugangskontrollvorrichtung erfasste Ereignis beispielsweise ein Detektieren einer Präsenz der Zugangsberechtigungsnachweisvorrichtung in der Umgebung der Zugangskontrollmittel, das Empfangen von Zugangsberechtigungsinformation von einer Zugangsberechtigungsnachweisvorrichtung, das Bewirken des Entriegelns zumindest einer Tür und/oder das Öffnen zumindest einer Tür. Zum Beispiel umfasst die Zugangskontrollvorrichtung einen Sensor und/oder eine Sensorschaltung, die eingerichtet ist, ein solches Ereignis zu erfassen. Zum Beispiel umfasst die Zugangskontrollvorrichtung Zeitmessmittel zum Messen der Zeit (z.B. eine Timerschaltung und/oder eine Timerfunktion, beispielsweise eine Timerschaltung und/oder eine Timerfunktion der Steuermittel).

Der vorgegebene Aktivzeitschwellwert beträgt zum Beispiel weniger als 1 Stunde, vorzugsweise weniger als 30 Minuten, besonders vorzugsweise weniger als 16 Minuten.

Zum Beispiel sind die Steuermittel der Zugangskontrollvorrichtung eingerichtet, einen Wechsel des Betriebsmodus der ersten Kommunikationsmittel, der zweiten Kommunikationsmittel und/oder der Steuermittel zu bewirken, wenn die gemessene Aktivzeit einen vorgegebenen Zeitschwellwert überschreitet. Dies ist beispielsweise vorteilhaft, um den Energieverbrauch der Zugangskontrollvorrichtung zu reduzieren.

Gemäß einer beispielhaften Ausführungsform der Erfindung sind die ersten Kommunikationsmittel beim Detektieren in einem Detektionsmodus (z.B. einem energiesparenden Detektionsmodus), und die zweiten Kommunikationsmittel sind beim Detektieren in einem Energiesparmodus.

Gemäß einer beispielhaften Ausführungsform der Erfindung umfasst die Zugangskontrollvorrichtung ferner Erfassungsmittel, die eingerichtet sind, Signale von der Zugangsberechtigungsnachweisvorrichtung zu erfassen (z.B. zu empfangen und/oder zu erhalten) und die Leistung der erfassten Signale auszuwerten. Zum Beispiel sind die Erfassungsmittel ferner eingerichtet, die Leistung der erfassten Signale mit einem Leistungsschwellwert zu vergleichen. Wenn die Leistung der erfassten Signale über einem Leistungsschwellwert liegt, wird beispielsweise eine Änderung des Betriebsmodus der zweiten Kommunikationsmittel und/oder der Zugangskotrollvorrichtung bewirkt (z.B. durch die Erfassungsmittel). Zum Beispiel ist der Leistungsschwellwert derart gewählt, dass die Zugangsberechtigungsnachweisvorrichtung sich in der Umgebung der Zugangskontrollvorrichtung befinden muss (z.B. mit einem Abstand von weniger als 1 m, vorzugsweise weniger als 10 cm, besonders vorzugsweise weniger als 5 cm von der Zugangskontrollvorrichtung und/oder den Erfassungsmitteln, z.B. weniger als 2 cm von der Zugangskontrollvorrichtung und/oder den Erfassungsmitteln), damit die Leistung der erfassten Signale über dem Leistungsschwellwert liegt.

Zum Beispiel wird die Leistung der erfassten Signale periodisch ausgewertet (z.B. periodisch abgetastet). Zum Beispiel sind die Signale elektro-magnetische, elektrische oder magnetische Signale. Die Signale sind beispielsweise elektro-magnetische Signale (z.B. Funksignale) mit einer Frequenz von 2,4 Ghz. Zum Beispiel sind die Signale Bluetooth-Signale.

Zum Beispiel sind die Erfassungsmittel ein Sensor und/oder eine Sensorschaltung für Signale. Zum Beispiel umfassen die Erfassungsmittel eine Antenne (z.B. eine Patch-Antenne) und eine Empfangsleistungsauswerteschaltung. Zum Beispiel umfassen die Erfassungsmittel eine Patch-Antenne, eine Antennenanpassung mit schmalbandigen 2.4GHz HF Filter, einen Leistungsdetektor für 2.4GHz HF Signale, eine Pegelauswertung der Empfangenen HF Energie und eine Tastschaltung für gepulste Abfrage, um Störsignale durch andere HF Medien (z.B. WLAN) weitgehend abzublocken und um den Stromverbrauch zu reduzieren.

Die Erfassungsmittel sind beispielsweise vorteilhaft, um zusätzliche Mittel vorzusehen, die eine Änderung des Betriebsmodus bewirken können (z.B. wenn der Anteil an ferromagnetischen Material in der Zugangsberechtigungsnachweisvorrichtung nicht groß genug ist, um eine durch die ersten Kommunikationsmittel erfassbare Veränderung der physikalischen Größe, wie oben beschrieben, zu bewirken).

Die oben beschriebenen Ausführungsbeispiele und beispielhaften Ausgestaltungen der vorliegenden Erfindung sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine Ansicht einer beispielhaften Ausführungsform eines erfindungsgemäßen Paketkastens;
- Fig. 2: eine dreidimensionale Ansicht eines Verriegelungselementmoduls für die erste Tür des Paketkastens gemäß Fig. 1;
- Fig. 3: eine Schnittzeichnung durch das Verriegelungselementmodul gemäß Fig. 2;
- Fig. 4: eine dreidimensionale Ansicht eines Verriegelungselementmoduls für die zweite Tür des Paketkastens gemäß Fig. 1;
- Fig. 5: eine Seitenansicht des Verriegelungselementmoduls gemäß Fig. 4;
- Fig. 6: eine Schnittzeichnung durch das Verriegelungselementmodul gemäß Fig. 4;
- Fig. 7: eine Explosionsdarstellung der Verriegelungselementmodule gemäß Fig. 2 und Fig. 4 vor ihrer Montage;
- Fig. 8: einen Montageträger zur Montage der Verbindungselementmodule;
- Fig. 9: auf dem Montageträger gemäß Fig. 8 montierte Verriegelungselementmodule gemäß Fig. 2 und Fig. 4 in dreidimensionaler Ansicht;
- Fig. 10: ein Blockschaltbild der elektronischen Komponenten einer beispielhaften Ausführungsform einer erfindungsgemäßen Zugangskontrollvorrichtung;
- Fig. 11: ein Flussdiagramm einer beispielhaften Ausführungsform eines erfindungsgemäßen Verfahrens;
- Fig. 12: ein Flussdiagramm eines Beispiels für ein erfindungsgemäßes Verfahren; und
- Fig. 13: ein Flussdiagramm eines Beispiels für eine erfindungsgemäße Verwendung

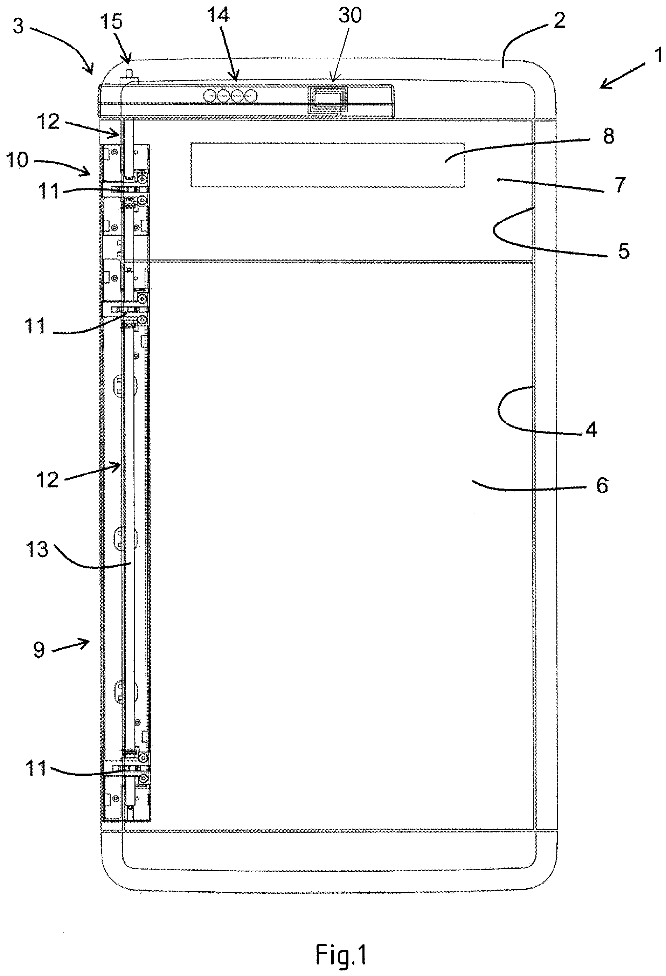

Anhand der Fig. 1 bis 9 wird eine erfindungsgemäße Aufnahmevorrichtung anhand einer besonders bevorzugten Ausführungsform als Paketkasten 1 zur Aufnahme von zuzustellenden Briefen und Paketen beschrieben. Es wird jedoch darauf hingewiesen, dass es sich bei dem Paketkasten 1 zwar um eine besonders bevorzugte Ausführungsform der vorliegenden Erfindung handelt. Diese ist jedoch nicht auf die Verwendung in Paketbriefkästen beschränkt, insbesondere ist die erfindungsgemäße Zugangskontrollvorrichtung nicht auf die Verwendung in einem Paketkasten wie dem Paketkasten 1 beschränkt, sondern kann generell in Zugangskontrollsystemen eingesetzt werden.

Der Paketkasten 1 umfasst ein Gehäuse 2, eine Verriegelungseinheit 3 und eine erfindungsgemäße Zugangskontrollvorrichtung 30. Das Gehäuse 2 hat eine erste Gehäuseöffnung 4 für ein erstes Aufnahmefach für Pakete und eine zweite Gehäuseöffnung 5 für ein zweites Aufnahmefach für Briefe. Ferner umfasst der Paketkasten 1 eine erste Tür 6 zum Verschließen der ersten Gehäuseöffnung 4 und eine zweite Tür 7 zum Verschließen der zweiten Gehäuseöffnung 5. Die zweite Tür 7 weist einen Schlitz 8 zum Einwurf von Briefen ohne Öffnen der zweiten Tür 7 des zweiten Aufnahmefachs auf. Der Schlitz kann beispielsweise mit einer nach außen oder innen öffenbaren Klappe versehen sein (nicht dargestellt), die nicht verschlossen ist. Beide Türen 6, 7 sind mittels der Verriegelungseinheit 3 verriegelbar.

Die Verriegelungseinheit 3 weist jeweils ein Verriegelungselementmodul 9, 10 mit mindestens einem in dem dargestellten Beispiel als Schließhaken ausgebildeten Verriegelungskörper 11 für jede Tür 6, 7 und mit einem Verriegelungsantrieb 12 zum Betätigen der Verriegelungskörper 11 auf.

In dem Paketkasten 1 weist das Verriegelungselementmodul 9 für die erste Tür 6 zwei Verriegelungskörper 11 und das Verriegelungselementmodul 10 für die zweite Tür 7 lediglich einen Verriegelungskörper 11 auf. Der Verriegelungsantrieb 12 für jedes der beiden Verriegelungselementmodule 9, 10 weist ein gemeinsames Antriebselement 13 auf, das als drehbare Achse in Form einer Stange ausgebildet ist. Die Stange 13 als gemeinsames Antriebselement ist um einen Verstellweg bewegbar (drehbar) ausgebildet.

In einer ersten Verstellposition bringt die Stange 13 lediglich den Verriegelungskörper 11 für die erste Tür 6 in eine Entriegelungsposition. In der zweiten Verstellposition, die durch ein Weiterdrehen der Stange 13 als gemeinsames Antriebselement erreicht wird, werden die Verriegelungskörper 11 für alle Türen 6, 7 in eine Entriegelungsposition gebracht. Für das gemeinsame Antriebselement 13 der Verriegelungsantriebe 12 der jeweiligen Verriegelungselementmodule 9, 10 ist ein elektromotorischer Antrieb 14 vorgesehen, der mittels einer Kopplung 15 mit dem gemeinsamen Antriebselement 13 (Stange) in Wirkverbindung so gekoppelt ist, dass der elektromotorische Antrieb 14 die Stange 13 (drehbare Achse als gemeinsames Antriebselement) zwischen den verschiedenen Verstellpositionen bewegen kann.

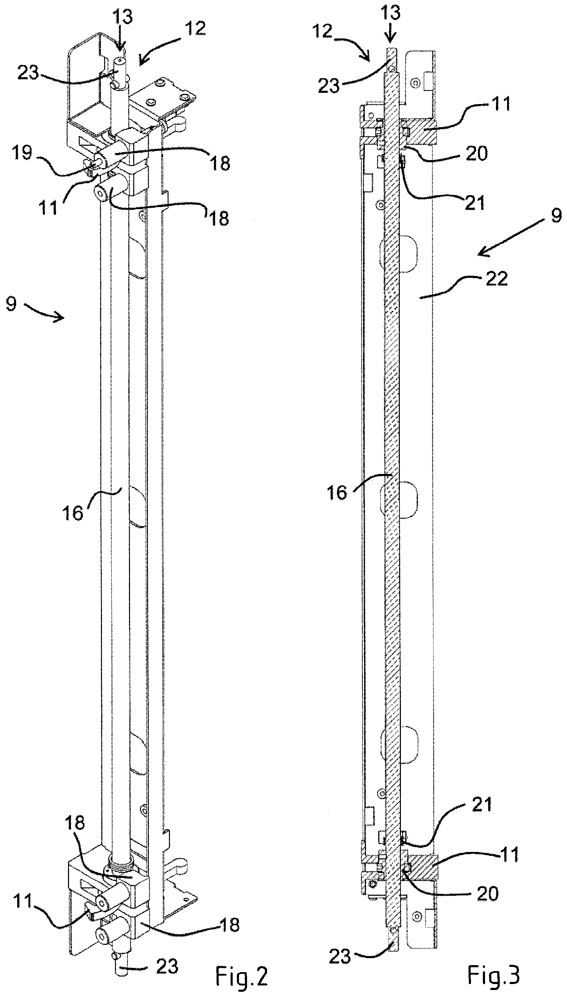

Nachfolgend wird mit Bezug auf die Fig. 2 bis 9 der Aufbau der Verriegelungseinheit 3 anhand des Beispiels des Paketkastens 1 mit zwei Türen 6, 7 näher beschrieben. Die beschriebenen und/oder dargestellten Merkmale lassen sich, wie für den Fachmann ohne weiteres ersichtlich, auch auf andere Gehäuse 2 mit ggf. mehr als zwei Gehäuseöffnungen 4, 5 übertragen, indem die einzelnen Verriegelungselementmodule 9, 10 in entsprechend größerer Zahl miteinander kombiniert bzw. gekoppelt werden.

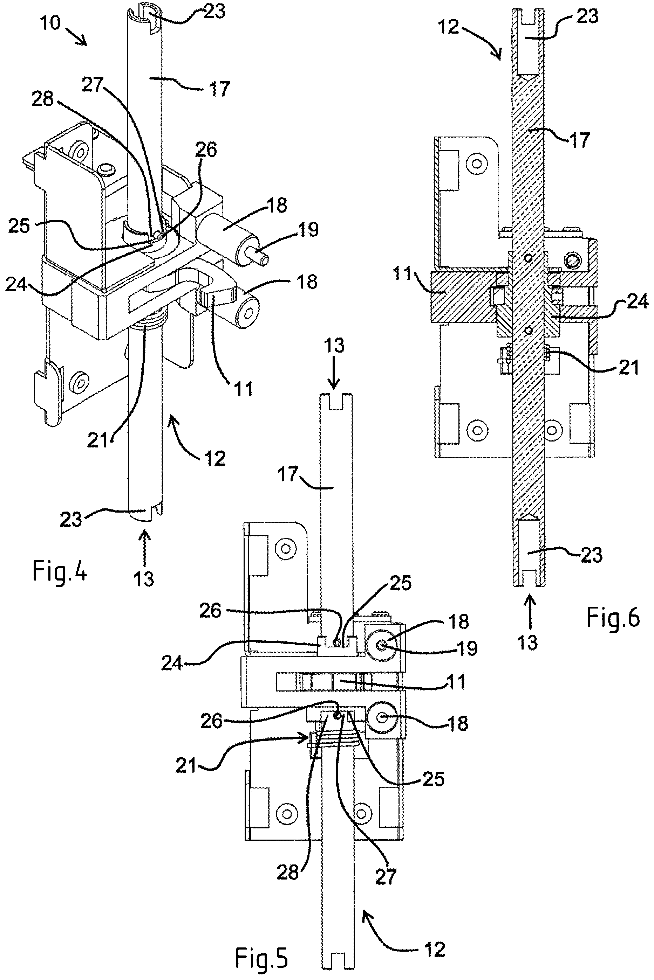

Das in Fig. 2 dargestellte Verriegelungselementmodul 9 für die erste Tür 6 weist als Verriegelungsantrieb 12 ein erstes Stangenteil 16 auf, das mit einem zweiten Stangenteil 17 des in Fig. 4 dargestellten Verriegelungselementmoduls 10 verbunden wird, um das gemeinsame Antriebselement 13 der Verriegelungseinheit 3 zu bilden.

An dem ersten Stangenteil 16 sind zwei als Schließhaken ausgebildete Verriegelungskörper 11 angeordnet, indem diese Verriegelungskörper 11 (Schließhaken) unbeweglich, d.h. fix und gegenüber dem ersten Stangenteil 16 unverdrehbar, an dem ersten Stangenteil 16 festgelegt sind. Das erste Stangenteil 16 bildet also den Verriegelungsantrieb 12 des ersten Verriegelungselementmoduls 9 für die erste Tür 6, indem durch Verdrehen des Stangenteils 16 der Schließhaken 11 unmittelbar mitgedreht wird, und zwar aus der in Fig. 2 dargestellten Verrieglungsposition in eine Entriegelungsposition, in welcher der Schließhaken 11 ein nicht dargestelltes Riegelelement der ersten Tür 6 freigibt, so dass die Tür 6 geöffnet werden kann.

Um die erste Tür 6 automatisch zu öffnen, wenn der Schließhaken 11 das Riegelelement der ersten Tür freigibt, sind in axialer Richtung jeweils oberhalb und unterhalb des Schließhakens Führungshalterungen 18 zur Aufnahme eines mittels einer Druckfeder oder dergleichen vorgespannten Auswerfstößels 19 vorgesehen. Wie in Fig. 2 dargestellt, ist ein Auswerfstößel 19 in der Regel ausreichend, um die Tür nach Freigabe der Verriegelung automatisch zu öffnen.

An dem Auswerfstößel 19 kann ein Türöffnungssensor, zum Beispiel ein mit einem Magnetsensor zusammenwirkender Permanentmagnet, angeordnet sein, um einen Offenzustand der Tür zu detektieren. Dies kann beispielsweise für eine Logbuchfunktion der Zugangskontrollvorrichtung 30 verwendet werden, welche das Öffnen und Schließen der Türen 6, 7 des Gehäuses 2 in einem Logbuch aufzeichnet. Ein solches Logbuch kann durch den Nutzer abgerufen und überprüft werden.

Der Schnittzeichnung gemäß Fig. 3 ist zu entnehmen, dass die als Schließhaken ausgebildeten Verriegelungskörper 11 über eine Montagehülse 20 mit dem ersten Stangenteil 16 des ersten Verriegelungselementmoduls 9 verbunden sind, so dass die Montagehülse 20 und der Verriegelungskörper 11 nicht gegenüber der durch das erste Stangenteil 16 gebildeten Achse (als Teil des gemeinsamen Antriebselements 13) verdreht werden können. Die Kräfte einer Drehung des ersten Stangenteils 16 werden also direkt auf den Schließhaken (Verriegelungskörper 11) übertragen.

Daher wäre es grundsätzlich auch möglich, den Schließhaken 11 direkt, d.h. ohne das Vorsehen einer Montagehülse 20, mit dem ersten Stangenteil 16 zu verbinden. Die Verwendung der Montagehülse 20 hat jedoch den Vorteil, dass durch Verwendung der Montagehülse 20 derselbe Verriegelungskörper 11 für das erste Verriegelungselementmodul 9 und das zweite Verriegelungselementmodul 10 verwendet werden kann, das später mit Bezug auf die Fig. 4 bis 6 noch detailliert beschrieben wird.

Das erste Verriegelungselementmodul 9 ist als Schnappverschluss ausgebildet. Dies bedeutet, dass die Verriegelungskörper 11 in Schließrichtung, d.h. in die in Fig. 2 dargestellte Verriegelungspositionen, vorgespannt sind. Hierfür ist benachbart zu dem Verriegelungskörper 11 an dem ersten Stangenteil 16 eine Rückstellfeder 21 vorgesehen, welche mit einem Ende an dem ersten Stangenteil 16 und mit dem anderen Ende an einem Verriegelungselementmodulkörper 22 festgelegt ist, welcher die Elemente des ersten Verriegelungselementmoduls 9 trägt. Wenn das erste Stangenteil 16 aus der in Fig. 2 dargestellten Schließposition des Verriegelungskörpers 11 in eine Verstellposition gedreht wird, in welcher der Verriegelungskörper 11 ein nicht dargestelltes Riegelelement der ersten Tür 6 freigibt, wird die Rückstellfeder 21 weiter gespannt, so dass das Stangenteil 16, wenn es von dem elektromotorischen Antrieb 14 nicht mehr in der Freigabe-Verstellposition gehalten wird, zurückdreht, bis der Verriegelungskörper 11 in der in Fig. 2 dargestellten Verriegelungsposition ist.

Wenn nun eine geöffnete Tür 6 geschlossen wird, wird der Schließkörper 11 durch das an der Tür 6 vorhandene Riegelelement aus der Verriegelungsposition gedrückt, indem das Stangenteil 16 entgegen der Kraft der Rückstellfeder 21 verdreht wird. Sobald sich die Tür 6 in der Geschlossen-Position befindet, kann der als Verriegelungskörper 11 ausgebildete Schließhaken das Riegelelement der Tür 6 umschließen, so dass das Stangenteil 16 aufgrund der Rückstellkraft der Rückstellfeder 21 in die Verriegelungsposition zurückgestellt wird und das Riegelelement der Tür 6 in die Hakenöffnung des Schließhakens 11 eingreift. Dies wird als Schnappverschluss bezeichnet.

Das in den Fig. 4 bis 6 im Detail dargestellte zweite Verriegelungselementmodul 10 für die zweite Tür 7 weist ein zweites Stangenteil 17 auf, das über eine Kopplung 23 (auch als Koppelstücke bezeichnet) mit dem ersten Stangenteil 16 gekoppelt werden kann. Dazu sind Elemente der Kopplung 23 sowohl an dem ersten Stangenteil 16 als auch an dem zweiten Stangenteil 17 ausgebildet, die bei Verbindung der beiden Stangenteile 16, 17 formschlüssig ineinandergreifen und die Drehbewegung eines Stangenteils 16, 17 unmittelbar auf das andere Stangenteil 16, 17 übertragen. In zu dem Verriegelungselementmodul 9 für die erste Tür 6 analoger Weise weist auch das Verriegelungselementmodul 10 für die zweite Tür 7 einen als Schließhaken ausgebildeten Verriegelungskörper 11 auf, der durch Verdrehen des zweiten Stangenteils 17 zwischen einer in Fig. 4 dargestellten Schließposition und einer Entriegelungs- oder Freigabeposition verstellt werden kann, in welcher der Schließhaken 11 ein nicht dargestelltes Riegelelement der zweiten Tür 7 freigibt.

In der entriegelten Position wird die zweite Tür 7 von einem Auswerfstößel 19 automatisch geöffnet, der in einer Führungshalterung 18 vorgesehen ist. Wie auch bei dem ersten Verriegelungselementmodul 9 befinden sich zwei Führungshalterungen 18 in axialer Richtung auf beiden Seiten des Verriegelungskörpers 11, wobei ein Auswerfstößel 19 nur in einer der beiden Führungshalterungen vorgesehen werden muss, um die zweite Tür 7 nach der Entriegelung zuverlässig zu öffnen.

Anders als bei dem ersten Verriegelungselementmodul 9 ist der Verriegelungskörper 11 des zweiten Verriegelungselementmoduls 10 um die durch das zweite Stangenelement 17 im Bereich des zweiten Verriegelungselementmoduls 10 gebildete drehbare Achse 13 mit einem definierten Spiel verdrehbar gelagert. Dies hat zur Folge, dass ein an dem zweiten Stangenteil 17 verdrehbar gelagerter Verriegelungskörper 11 nur mitbewegt wird, wenn das Spiel in dem Verstellweg des gemeinsamen Antriebselements 13, respektive des zweiten Stangenteils 17, überschritten ist. Erst dann beginnt die Drehbewegung des Verriegelungskörpers 11, durch welche der Schließhaken (Verriegelungskörper 11) außer Eingriff mit dem Riegelelement der zweiten Tür 7 gebracht wird. Erst dann erfolgt also das Öffnen der zweiten Tür 7 und damit die Freigabe der zweiten Gehäuseöffnung in das Aufnahmefach für Briefe.

Für das Vorsehen des Spiels ist der Verriegelungskörper 11 des zweiten Verriegelungselementmoduls 10 über eine Lagerhülse verdrehbar auf dem zweiten Stangenteil 17 gelagert. Dazu weist die Lagerhülse 24 eine Ausnehmung 25 auf, welche auf der durch das Stangenteil 17 gebildeten, auch selbst drehbaren Achse 13 beweglich geführt ist. Dazu greift ein auf der Achse 13 radial vorstehender Bolzen 26 in die Ausnehmung 25 der Lagerhülse 24 ein. Dadurch wird das Spiel zum Verdrehen der Lagerhülse 24 auf der Achse 25 definiert, weil sich der Bolzen 26 in der Ausnehmung 25 soweit drehen kann, bis er den Rand der Ausnehmung 25 erreicht, bevor die Lagerhülse 24 bei einer Bewegung des Stangenteils 17 mitgedreht wird. Der Schließhaken 11 ist fix mit der Lagerhülse 24 verbunden.

Wie der Seitenansicht des Verriegelungselementmoduls 10 für die zweite Tür 7 gemäß Fig. 5 zu entnehmen, weist die Lagerhülse 24 zwei Ausnehmungen 25 an den gegenüberliegenden axialen Enden der Lagerhülse 24 auf, in die jeweils ein auf der durch das zweite Stangenteil 17 gebildeten drehbaren Achse 13 radial vorstehender Bolzen 26 eingreift. Dies bewirkt, dass die Lagerhülse 24 durch die beiden in die Ausnehmungen 25 eingreifenden Bolzen 26 axial fixiert ist und durch die Ausnehmung 25, in welche die Bolzen 26 aufgenommen sind, das Spiel zum Verdrehen der Lagerhülse 24 um die Achse 13 vorgegeben ist.

In der in den Fig. 4 und Fig. 5 dargestellten Schließstellung, in welcher sich der Schließhaken 11 in der Verriegelungsposition befindet, sind die Bolzen 26 in einem mittleren Bereich der das Spiel für das Verdrehen der Lagerhülse 24 auf der Achse definierenden Ausnehmung 25 aufgenommen. Damit ergeben sich zwei Spielbereiche 27, 28 in der Ausnehmung 25 für jede Drehrichtung der Achse 13 respektive des zweiten Stangenteils 17. Der erste Spielbereich 27 bewirkt, dass das erste Stangenteil 17 zunächst in Richtung einer Öffnungsbewegung gedreht werden kann, ohne dass der Verriegelungskörper 11 aus seiner Verriegelungsposition, in welche er das Riegelelement der zweiten Tür 7 freigibt, weggedreht wird. Andererseits wird, wie bereits erläutert, bei der Drehbewegung der drehbaren Achse 13 als gemeinsames Antriebselement der Verriegelungskörper des ersten Stangenteils 16 in dem ersten Verriegelungselementmodul 9 bereits in eine Entriegelungsposition überführt, so dass die erste Tür 6 bereits öffnet. Durch den ersten Spielbereich 27 in der Ausnehmung 25 wird also bewirkt, dass die zweite Tür 7 erst nach der ersten Tür 6 öffnet.

Wird also die drehbare Achse 13 als gemeinsames Antriebselement nur in eine erste Verstellposition verbracht, in der der radial vorstehende Bolzen 26 in der Ausnehmung 25 nur den ersten Spielbereich 27 ausnutzt, ohne gegen den Rand der Ausnehmung 27 zu stoßen und die Lagerhülse 24 mit zu bewegen, wird nur die erste Tür 6 entriegelt und die zweite Tür 7 bleibt verriegelt. Durch eine entsprechend gesteuerte Drehbewegung der drehbaren Achse 17 kann also gezielt nur die erste Tür 6 zur Öffnung freigegeben werden.

Erst wenn die drehbare Achse 13 in eine zweite Verstellposition weitergedreht wird, nimmt der radial vorstehende Bolzen 26 in Anlage an den Rand der Ausnehmung 25 die Lagerhülse 24, und damit den Schließhaken 11, mit, um auch die zweite Tür 7 zu entriegeln.

Ist dagegen die zweite Tür 7 geöffnet und befindet sich die drehbare Achse 13, respektive das zweite Stangenteil 17, in der in den Fig. 4 und 5 gezeigten Verriegelungsposition, wird der Schließkörper 11 beim Zudrücken der Tür in ihre verriegelte Position aus der in den Fig. 4 und 5 dargestellten Verriegelungsposition herausgedrückt, indem das Riegelelement der Tür an dem Schließkörper 11 anstößt. Dabei wird die Lagerhülse 24 auf der drehbaren Achse 13, respektive dem zweiten Stangenteil 17, verdreht, bis sich die zweite Tür 7 in ihrer Geschlossen-Stellung befindet und das Riegelelement der zweiten Tür 7 von dem Schließhaken 11 umfasst werden kann. In dieser Position schnappt der Schließhaken 11, angetrieben durch die Rückstellfeder 21, analog zu dem zuvor beschriebenen Fall für das erste Verriegelungselementmodul 10 in die Schließstellung zurück.

Dafür ist der zweite Spielbereich 28 der Ausnehmung 25 vorgesehen, der eine Bewegung der Lagerhülse 27 (und des mit der Lagerhülse 27 fest verbundenen Schließkörpers 11) erlaubt, ohne dass der gemeinsame Antrieb 26 mitgedreht wird.

Wie der Schnittzeichnung gemäß Fig. 6 zu entnehmen, ist die Lagerhülse 24, abgesehen von den in der Ausnehmung 25 geführten Bolzen 26, auf dem zweiten Stangenteil 17 frei beweglich gelagert.

Für die Kopplung 23 des zweiten Stangenteils 17 an das erste Stangenteil 16 weist das zweite Stangenteil 17 eine axiale Bohrung mit einer radial verlaufenden Ausnehmung auf, in welche ein in Fig. 3 dargestellter Achsenkern mit radial verlaufendem Bolzen eingreift, so dass die ersten und zweiten Stangenteile 17 in Axialrichtung einfach ineinander gesteckt werden können und eine Drehung direkt aufeinander übertragen. Achskern und axiale Bohrung werden auch als Koppelstücke bezeichnet, die geeignet zusammenwirken, um die Kopplung 23 zu bewirken.

Die Koppelstücke der Kopplung 23 an dem ersten Stangenteil 16 und dem zweiten Stangenteil 17 sind über die horizontale Mittelachse symmetrisch ausgebildet, so dass eine Links-Rechts-Tauschbarkeit des ersten Verriegelungselementmoduls 9 und des zweiten Verriegelungselementmoduls 10 gegeben ist. Hierdurch kann das Modul einfach von einem Rechtsanschlag der Tür auf einen Linksanschlag der Tür bzw. umgekehrt durch eine Drehung um 180° getauscht werden.

Um diese Tauschbarkeit auch hinsichtlich des Angriffes der Verriegelungskörper 11 an den nicht dargestellten Riegelelementen der Türen 6, 7 zu erreichen, ist ferner vorgesehen, dass der eine bzw. die mehreren Verriegelungskörper 11 auf einem Stangenteil 16, 17 in axialer Richtung bezogen auf die horizontale Mittelachse des Stangenteils 16, 17 spiegelsymmetrisch angeordnet sind. Das heißt, dass die Verriegelungskörper auf beiden Hälften des Stangeteils 16, 17 bezogen auf die Mitte des Stangenteils 16, 17 symmetrisch angeordnet sind. Damit liegen die Verriegelungskörper 11 jeweils nach einer Drehung des Verriegelungselementmoduls 9, 10 um 180° axial in derselben Höhe, so dass sie entsprechend an den Riegelelementen der Türen 6, 7 angreifen zu können.

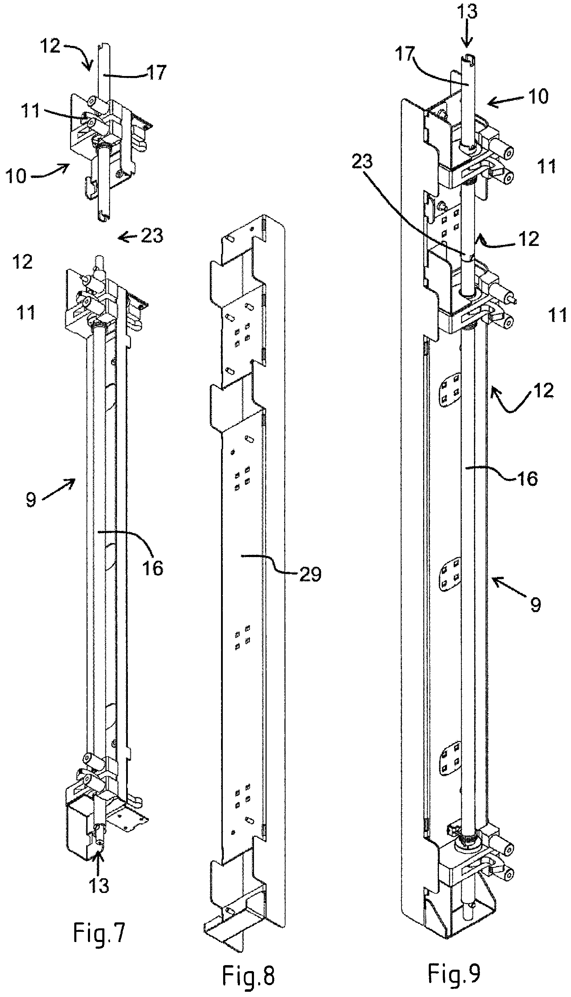

In Fig. 7 sind in einer Explosionsdarstellung das Verriegelungselementmodul 9 für die erste Tür und das Verriegelungselementmodul 10 für die zweite Tür 7 gezeigt, die zuvor mit Bezug auf die Fig. 2 bzw. Fig. 4 schon detailliert erläutert wurden. Die Verriegelungselementmodule 9, 10 weisen entsprechend ein erstes Stangenteil 16 bzw. ein zweites Stangenteil 17 auf, die über die zuvor beschriebene Kopplung 23 in einander gesteckt werden können, so dass bei der Drehung eines Stangenteils 16, 17 das andere Stangenteil 17, 16 mit dreht.

In Fig. 7 sind die beiden Elemente kurz vor dem Zusammenstecken dargestellt. Nach dem Zusammenstecken bilden das erste Stangenteil 16 und das zweite Stangenteil 17 zusammen das gemeinsame Antriebselement 13 (drehbare Achse), das über die Kopplung 15 mit dem elektromotorischen Antrieb 14 verbunden werden kann (vgl. Fig. 1). Der elektromotorische Antrieb 14 kann auch eine Steuerung mit Authentifizierungsfunktion enthalten, die je nach erfolgter Authentifizierung die Verstellung der drehbaren Achse 13 als gemeinsames Antriebselement derart vornimmt, dass entweder nur die erste Tür 6 (insbesondere des Paketfaches) oder gemeinsam die erste Tür 6 und die zweite Tür 7 (insbesondere des Paketfaches und des Briefkastens zusammen) geöffnet wird.

Um den Schnappverschluss wirksam zu gestalten, kann vorgesehen sein, dass nach der Öffnung der Türen 6 und/oder 7, nachgewiesen bspw. durch einen entsprechenden Türöffnungssensor in Verbindung mit dem Auswerfstößel 19 für jede Tür 6, 7, die drehbare Achse 13 durch den elektromotorischen Antrieb 14 wieder in die Schließstellung zurückgedreht wird, in der die Verriegelungskörper 11 die in den Fig. 4 und 6 gezeigten Positionen aufweisen.

Nach dem Zusammenstecken der Verriegelungselementmodule 9, 10 können diese auf dem in Fig. 8 gezeigten Montageträger 29 in Form eines Montageblechs montiert werden, wobei für einen Rechts- bzw. Linksanschlag der Türen 6, 7 die Verriegelungselementmodule 9, 10 in jeder der beiden möglichen, um 180° gedrehten Positionen angebracht werden können.

Fig. 9 zeigt den Montageträger 8 mit den darauf montierten Verriegelungselementmodulen 9, 10, deren erste und zweite Stangenteile 16, 17 zu dem gemeinsamen Antriebselement 13 (drehbare Achse) zusammengefügt sind.

Durch die vorgeschlagene Verriegelungseinheit 3 wird ein einfach handhabbarer Verriegelungsmechanismus für ein Gehäuse 2 mit Gehäuseöffnungen 4, 5, die jeweils durch Türen 6, 7 verschließbar und verriegelbar sind, vorgeschlagen, wobei eine erste Gruppe von Türen 6 separat entriegelt werden kann, indem ein gemeinsames Antriebselement 13 der Verriegelungseinheit 3 in eine erste Verstellposition gebracht wird. Bei dem Verbringen des gemeinsamen Antriebselements 13 in eine zweite Verstellposition werden dann beide Türen 6, 7 gemeinsam entriegelt. Diese Anwendung eignet sich besonders gut für einen Paketkasten, bei dem ein Paketzusteller die erste Tür des Paketfaches unabhängig von der zweiten Tür des Brieffaches öffnen und schließen kann.

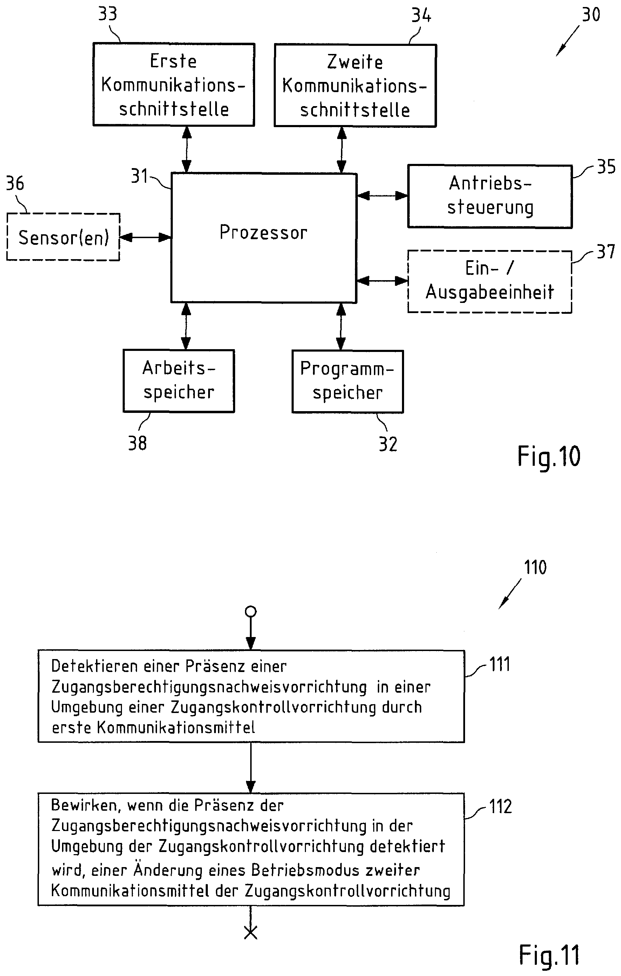

Fig. 10 ist ein Blockschaltbild einer beispielhaften Ausführungsform der erfindungsgemäßen Zugangskontrollvorrichtung 30. Wie in Fig. 1 dargestellt, kann die Zugangskontrollvorrichtung 30 beispielsweise im Inneren des Paketkastens 1, beispielsweise in der Nähe des Antriebs 14 (siehe Fig. 1) angeordnet sein.

Prozessor 31 der Zugangskontrollvorrichtung ist insbesondere als Mikrocontroller ausgebildet. Prozessor 31 führt Programmanweisungen aus, die in Programmspeicher 32 gespeichert sind, und speichert beispielsweise Zwischenergebnisse oder ähnliches in Arbeitsspeicher 38. Zum Beispiel ist Programmspeicher 32 ein nicht-flüchtiger Speicher wie ein Flash-Speicher, ein Magnetspeicher, ein EEPROM-Speicher, ein persistenter Speicher wie ein ROM-Speicher und/oder ein optischer Speicher. Arbeitsspeicher 38 ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Vorzugsweise sind Programmspeicher 32 und Arbeitsspeicher 38 zusammen mit Prozessor 31 in einem Modul angeordnet.

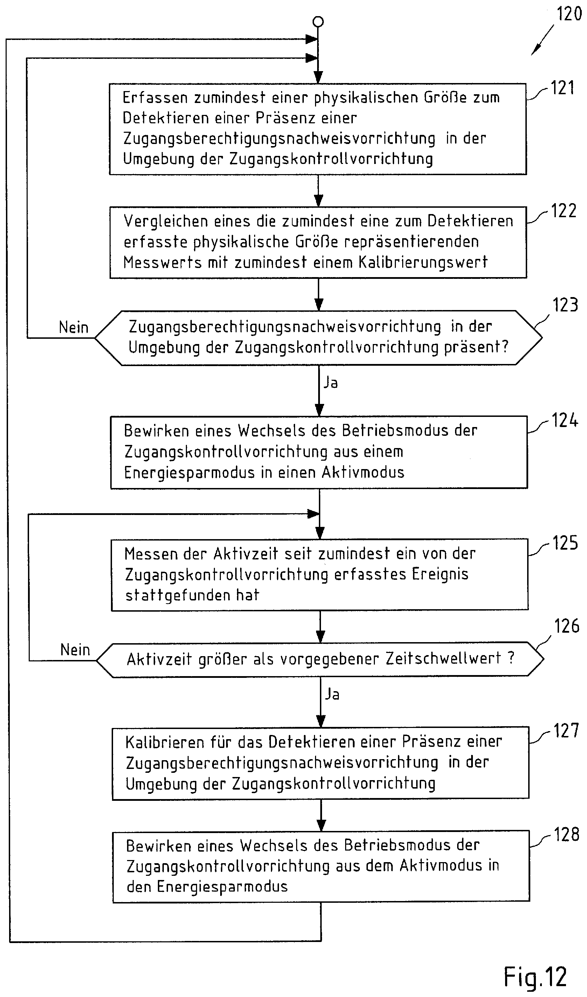

In Programmspeicher 32 sind beispielsweise Programmanweisungen gespeichert, die den Prozessor 31, wenn er die Progammanweisungen ausführt, veranlassen, zumindest teilweise die in Fig. 11 und 12 dargestellten Verfahren auszuführen und/oder zu steuern. Im Programmspeicher 32, oder in einem separaten (z.B. persistenten) Speicher kann auch Information gespeichert sein, die bei der Prüfung der Berechtigung einer Person, ein oder mehrere Türen 6, 7 des Paketkastens 1 zu öffnen, genutzt wird (z.B. eine Kennung des Paketkastens 1 und/oder der Zugangskontrollvorrichtung 30, ein oder mehrere Schlüssel zur Prüfung einer Zugangsberechtigungsinformation, etc.).

Die erste Kommunikationsschnittstelle 33 ist zum Beispiel eingerichtet, gemäß einer ersten drahtlosen Kommunikationstechnik zu kommunizieren. Die zweite Kommunikationsschnittstelle 34 ist zum Beispiel eingerichtet, gemäß einer zweiten drahtlosen Kommunikationstechnik zu kommunizieren. Im Folgenden wird beispielhaft angenommen, dass die erste drahtlose Kommunikationstechnik NFC ist und dass die zweite drahtlose Kommunikationstechnik Bluetooth ist (z.B. Bluetooth Version 2.1 und/oder 4.0). Zum Beispiel umfassen die Kommunikationsschnittstellen 33, 34 jeweils einen Prozessor, einen Arbeitsspeicher und einen Programmspeicher. Zum Beispiel sind im Programmspeicher der ersten Kommunikationsschnittstelle 33 Programmanweisungen gespeichert, die die erste Kommunikationsschnittstelle 33, wenn der Prozessor der ersten Kommunikationsschnittstelle 33 die Progammanweisungen ausführt, veranlassen, zumindest teilweise das in Fig. 11 und 12 dargestellte Verfahren auszuführen und/oder zu steuern. Zum Beispiel wird die erste Kommunikationsschnittstelle 33 zumindest teilweise von einem integrierten NFC Sendeempfänger wie dem NFC Sendeempfänger CR95HF von ST Microelectronics und einer NFC-Antenne (z.B. einer magnetischen Antenne) gebildet. Zum Beispiel wird die zweite Kommunikationsschnittstelle 34 zumindest teilweise von einem Bluetooth Sendeempfänger und einer Bluetooth-Antenne gebildet.

Der Prozessor 31 kann beispielsweise über die Kommunikationsschnittstellen 33 und 34 mit anderen Vorrichtungen wie einer Zugangsberechtigungsnachweisvorrichtung kommunizieren. Prozessor 31 ist beispielsweise operativ mit der ersten Kommunikationsschnittstelle 33 und der zweiten Kommunikationsschnittstelle 34 verbunden. Beispielsweise können die Kommunikationsschnittstellen Informationen von anderen Vorrichtungen empfangen oder abfragen und an Prozessor 31 weiterleiten und/oder Informationen von Prozessor 31 empfangen und an andere Vorrichtungen senden. Zum Beispiel steuert Prozessor 31 die erste Kommunikationsschnittstelle 33 und/oder die zweite Kommunikationsschnittstelle 34 zumindest teilweise.

Der Prozessor steuert ferner eine Antriebssteuerung 35, die eingerichtet ist, den Antrieb 14 (siehe Fig. 1) zu steuern. Beispielsweise ist die Antriebssteuerung Teil des Antriebs 14. Es ist jedoch auch denkbar, dass die Antriebssteuerung kein Teil des Antriebs 14 ist. Beispielsweise werden Steuersignale des Prozessors 31 in der Antriebssteuerung 35 in Spannungssignale für den Antrieb 14 umgesetzt, um das mit dem Antrieb 14 gekoppelte gemeinsame Antriebselement 13 in eine erste oder zweite Verstellposition oder in die Schließposition zu bewegen. Die von dem gemeinsamen Antriebselement 13 eingenommene Bewegungsstellung kann beispielsweise mit einem oder mehreren der Sensoren 36 (beispielsweise einem Magnetfeldsensor, wie bereits oben ausgeführt wurde) überprüft und beispielsweise in den Steuerungsprozess einbezogen werden.

Weitere der Sensoren 36 dienen beispielsweise zur Erfassung, ob jeweilige der Türen 6, 7 geöffnet oder geschlossen sind. Wie oben erläutert, kann es sich dabei beispielsweise um Türöffnungssensoren handeln, die beispielsweise jeweils an dem Auswerfstößel 19 angebracht sind.

Einer der Sensoren 36 kann beispielsweise auch ein Sensor für elektro-magnetische Signale (z.B. Funksignale) sein, zum Beispiel eine Antenne mit einem Leistungsdetektor.

Des Weiteren kann Prozessor 31 eine oder mehrere optional vorhandene Ein- /Ausgabeeinheiten 37 steuern. Eine Ein-/Ausgabeeinheit 37 ist beispielsweise eine Tastatur, eine Anzeigeeinheit, ein Mikrofon, eine berührungsempfindliche Anzeigeeinheit, ein Lautsprecher, ein Lesegerät, ein Laufwerk, eine Leuchte, eine Leuchtdiode, ein optisches Erfassungsmittel (z.B. ein Scanner) und/oder eine Kamera. Eine Ein-/Ausgabeeinheit 37 kann beispielsweise Eingaben eines Benutzers aufnehmen und an Prozessor 31 weiterleiten und/oder Informationen für den Benutzer von Prozessor 31 empfangen und ausgeben.

Die Komponenten 31 bis 38 können beispielsweise zusammen als Modul ausgebildet sein, oder können zumindest teilweise als Einzelmodule ausgebildet sein, um eine leichte Austauschbarkeit bei etwaigen Defekten zu gewährleisten. Zugangskontrollvorrichtung 30 kann neben den Komponenten 31 bis 38 weitere Komponenten umfassen und ist nicht auf diese Komponenten beschränkt. Zum Beispiel kann Zugangskontrollvorrichtung als weitere Komponente ein oder mehrere Energieversorgungsmittel wie eine Batterie umfassen.

Die Zugangskontrollvorrichtung 30 kann zumindest in zwei verschiedenen Betriebsmodi betrieben werden, nämlich zumindest in einem Aktivmodus und in einem Energiesparmodus.

Im Aktivmodus sind beispielsweise zumindest alle Hauptfunktionen der Komponenten der Zugangskontrollvorrichtung 30 aktiv. Eine Hauptfunktion der ersten Kommunikationsmittel 33 und der zweiten Kommunikationsmittel 34 ist zum Beispiel die Kommunikationsfunktion. Zum Beispiel können die ersten Kommunikationsmittel 33 und die zweiten Kommunikationsmittel 34 nur im Aktivmodus mit anderen Vorrichtungen kommunizieren. Im Energiesparmodus verbrauchen die Komponenten der Zugangskontrollvorrichtung 30 (und somit die Zugangskontrollvorrichtung 30) weniger Energie als im Aktivmodus. Zum Beispiel sind zumindest einige der Komponenten wie die zweiten Kommunikationsmittel 34 im Energiesparmodus deaktiviert, wohingegen sich andere Komponenten wie die ersten Kommunikationsmittel 33 beispielsweise in einem energiesparenden Detektionsmodus befinden.

Ein Detektionsmodus ist beispielsweise ein Energiesparmodus, in dem ein Mittel und/oder eine Komponente in regelmäßigen und/oder unregelmäßigen Zeitabständen prüft, ob eine vorgegebene Bedingung erfüllt ist. Wenn die vorgegebene Bedingung erfüllt ist, wechselt das Mittel und/oder die Komponente beispielsweise den Betriebsmodus (z.B. aus dem Detektionsmodus in den Aktivmodus). Zum Beispiel ist das Detektieren einer Präsenz einer Zugangsberechtigungsnachweisvorrichtung in der Umgebung der Zugangskontrollvorrichtung 30 eine solche Bedingung. Zum Beispiel ist die erste Kommunikationsschnittstelle 33 eingerichtet, das Detektieren einer Präsenz einer Zugangsberechtigungsnachweisvorrichtung in einer Umgebung der Zugangskontrollvorrichtung 30 eigenständig auszuführen, wenn sich die erste Kommunikationsschnittstelle 33 im Detektionmodus befindet und/oder solange sich die Zugangskontrollvorrichtung 30 im Energiesparmodus befindet.

Fig. 11 ist ein Flussdiagramm 110, das beispielhaft die Schritte eines erfindungsgemäßen Verfahrens darstellt. Die im Flussdiagramm 110 dargestellten Schritte werden von Komponenten der Zugangskontrollvorrichtung 30 ausgeführt und/oder gesteuert. Beispielsweise werden die Schritte zumindest teilweise von der ersten Kommunikationsschnittstelle 33 und/oder dem Prozessor 31 der Zugangskontrollvorrichtung 30 ausgeführt und/oder gesteuert.

In einem Schritt 111 wird eine Präsenz einer Zugangsberechtigungsnachweisvorrichtung in einer Umgebung der Zugangskontrollvorrichtung 30 durch die erste Kommunikationsschnittstelle 33 detektiert. Unter Detektieren einer Präsenz einer Zugangsberechtigungsnachweisvorrichtung in einer Umgebung der Zugangskontrollvorrichtung durch die erste Kommunikationsschnittstelle 33 soll beispielsweise verstanden werden, dass die erste Kommunikationsschnittstelle 33 feststellt, dass sich eine Zugangsberechtigungsnachweisvorrichtung zumindest mit einer hohen Wahrscheinlichkeit in der Umgebung der Zugangskontrollvorrichtung 30 befindet.

Die Umgebung der Zugangskontrollvorrichtung 30, in der eine Präsenz einer Zugangsberechtigungsnachweisvorrichtung durch die erste Kommunikationsschnittstelle 33 detektierbar ist, kann beispielsweise durch die Abnahme der Leistung eines von der ersten Kommunikationsschnittstelle erzeugten magnetischen, elektrischen und/oder elektromagnetischen Feld begrenzt sein. Ein solches Feld kann beispielsweise von einer Antenne abgestrahlt werden. Zum Beispiel ist die Umgebung der Zugangskontrollvorrichtung 30, in der eine Präsenz einer Zugangsberechtigungsnachweisvorrichtung durch die erste Kommunikationsschnittstelle 33 detektierbar ist, auf einen Raumbereich mit weniger als 50 cm, vorzugsweise weniger als 30cm, besonders vorzugsweise weniger als 12cm Abstand zu der ersten Kommunikationsschnittstelle 33 (z.B. zu der NFC-Antenne der ersten Kommunikationsschnittstelle 33) beschränkt.

Ein mögliche Ausgestaltung des Detektierens einer Präsenz einer Zugangsberechtigungsnachweisvorrichtung in der Umgebung der Zugangskontrollvorrichtung 30 durch die erste Kommunikationsschnittstelle 33 wird unten in Bezug auf die Schritte 121 bis 123 des Flussdiagramms 120 (siehe Fig. 12) beschrieben.

Ferner ist es auch denkbar, dass eine Präsenz einer Zugangsberechtigungsnachweisvorrichtung in einer Umgebung der Zugangskontrollvorrichtung 30 durch die optionalen Sensoren 36 detektiert wird. Wie oben beschrieben, kann einer der Sensoren 36 ein Sensor für elektro-magnetische Signale sein. Zum Beispiel kann dieser Sensor 36 elektro-magnetische Signale von der Zugangsberechtigungsnachweisvorrichtung erfassen und beispielsweise die Leistung der erfassten Signale auswerten. Liegt die Leistung der erfassten Signale (z.B. zumindest eines erfassten Signals oder mehrerer erfasster Signale) beispielsweise über einem Leistungsschwellwert, wird zum Beispiel bestimmt, dass eine Zugangsberechtigungsnachweisvorrichtung in einer Umgebung der Zugangskontrollvorrichtung 30 präsent ist. Die elektro-magnetischen Signale können beispielsweise eine Frequenz von 2,4 GHz haben (z.B. Bluetooth-Signale).

In einem Schritt 112 wird, wenn in Schritt 111 eine Präsenz der Zugangsberechtigungsnachweisvorrichtung detektiert wurde, eine Änderung eines Betriebsmodus der zweiten Kommunikationsschnittstelle 34 der Zugangskontrollvorrichtung 30 bewirkt.

Unter Bewirken einer Änderung eines Betriebsmodus der zweiten Kommunikationsschnittstelle 34 der Zugangskontrollvorrichtung 30 soll beispielsweise verstanden werden, dass ein Wechsel des Betriebsmodus der zweiten Kommunikationsschnittstelle 34 von einem Betriebsmodus zu einem anderen Betriebsmodus veranlasst wird (z.B. durch die ersten Kommunikationsschnittstelle 33 und/oder den Prozessor 31).

Ein mögliche Ausgestaltung des Bewirkens, wenn eine Präsenz einer Zugangsberechtigungsnachweisvorrichtung in der Umgebung der Zugangskontrollvorrichtung 30 detektiert wird, einer Änderung eines Betriebsmodus der zweiten Kommunikationsschnittstelle 34 der Zugangskontrollvorrichtung 30 wird unten in Bezug auf die Schritte 123 und 124 des Flussdiagramms 120 (siehe Fig. 12) beschrieben.

Fig. 12 ist ein Flussdiagramm 120, das die Schritte eines Beispiels für ein erfindungsgemäßes Verfahren darstellt. Die im Flussdiagramm 120 dargestellten Schritte werden von Komponenten der Zugangskontrollvorrichtung 30 ausgeführt und/oder gesteuert. Beispielsweise werden die Schritte zumindest teilweise von dem ersten Kommunikationsschnittstelle 33 und/oder dem Prozessor 31 der Zugangskontrollvorrichtung 30 ausgeführt und/oder gesteuert. Zu Beginn des Flussdiagramms ist die Zugangskontrollvorrichtung 30 im Energiesparmodus. Zum Beispiel ist die erste Kommunikationsschnittstelle 33 in einem Detektionsmodus, wenn die Zugangskontrollvorrichtung in dem Energiesparmodus ist.

In einem Schritt 121 wird zumindest eine physikalische Größe zum Detektieren einer Präsenz einer Zugangsberechtigungsnachweisvorrichtung in der Umgebung der Zugangskontrollvorrichtung 30 durch die erste Kommunikationsschnittstelle 33 erfasst.

Wie oben beschrieben, kann der Widerstand einer Antenne verändert werden, wenn ein Gegenstand in die Umgebung der Zugangskontrollvorrichtung gebracht wird. Aufgrund der Veränderung des Widerstands verändert sich auch die Stromstärke des Stroms der Antenne beim Senden des Burst-Signals, so dass dadurch detektiert werden kann, dass ein Gegenstand in der Umgebung der Zugangskontrollvorrichtung ist. Der Widerstand einer NFC-Antenne (z.B. einer magnetischen Antenne) wird beispielsweise verändert, wenn ein Gegenstand mit ferromagnetischen Eigenschaften in die Umgebung der NFC-Antenne gebracht wird.

Zum Beispiel wird in Schritt 121 eine physikalische Größe erfasst, die sich verändert, wenn sich der Widerstand einer NFC-Antenne der ersten Kommunikationsschnittstelle 33 verändert. Zum Beispiel sendet die ersten Kommunikationsschnittstelle 33 über die NFC-Antenne in Schritt 121 ein Signal und erfasst die Stromstärke eines Stroms der NFC-Antenne beim Senden des Signals (z.B. die Stromstärke des Treiberstroms der Antenne beim Senden des Signals). Wenn die Leistung beim Senden des Signals in Schritt 121 beispielsweise stets gleich ist, kann von einer Veränderung der Stromstärke auf eine Veränderung des Widerstands der NFC-Antenne und somit auf eine Präsenz eines Gegenstands mit ferromagnetischen Eigenschaften in der Umgebung der Zugangskontrollvorrichtung geschlossen werden.

In einem Schritt 122 wird ein die zumindest eine zum Detektieren erfasste physikalische Größe repräsentierender Messwert mit zumindest einem Kalibrierungswert verglichen.

Zum Beispiel repräsentiert der Kalibrierungswert einen Messwert der physikalischen Größe in dem Zustand, in dem die Zugangsberechtigungsnachweisvorrichtung in der Umgebung der Zugangskontrollvorrichtung nicht präsent ist oder zumindest mit einer hohen Wahrscheinlichkeit nicht präsent ist. Durch das Vergleichen des die zumindest eine zum Detektieren erfasste physikalische Größe repräsentierenden Messwerts mit dem zumindest einem Kalibrierungswert kann somit bestimmt werden, ob sich die physikalische Größe gegenüber dem Zustand, in dem die Zugangsberechtigungsnachweisvorrichtung in der Umgebung der Zugangskontrollvorrichtung nicht präsent ist, verändert hat. Beispielsweise ist vorgesehen, dass der die zumindest eine zum Detektieren erfasste physikalische Größe repräsentierende Messwert mit einem oberen Kalibrierungswert und einem unteren Kalibrierungswert verglichen wird. Zum Beispiel werden die Kalibrierungswerte so gewählt, dass, wenn der Messwert nicht zwischen dem unteren Kalibrierungswert und dem oberen Kalibrierungswert liegt, eine hohe Wahrscheinlichkeit für eine Präsenz einer Zugangsberechtigungsnachweisvorrichtung in der Umgebung der Zugangskontrollvorrichtung 30 besteht.

In dem obigen Beispiel, wird zum Beispiel ein Messwert, der die Stromstärke des Stroms der Antenne beim Senden des Signals in Schritt 121 repräsentiert, mit einem oberen Kalibrierungswert und einem unteren Kalibrierungswert verglichen, die die Stromstärke des Stroms der Antenne beim Senden des Signals repräsentieren, wenn die Zugangsberechtigungsnachweisvorrichtung in der Umgebung der Zugangskontrollvorrichtung nicht präsent ist oder zumindest mit einer hohen Wahrscheinlichkeit nicht präsent ist.

Im Flussdiagramm 120 wird der Kalibrierungswert beispielsweise in Schritt 127 bestimmt, unmittelbar bevor die Zugangskontrollvorrichtung 30 in den Energiesparmodus wechselt, da angenommen wird, dass die Zugangsberechtigungsnachweisvorrichtung in der Umgebung der Zugangskontrollvorrichtung zu diesem Zeitpunkt zumindest mit einer hohen Wahrscheinlichkeit nicht präsent ist.

In einem Schritt 123 wird bestimmt, ob eine Zugangsberechtigungsnachweisvorrichtung in der Umgebung der Zugangskontrollvorrichtung präsent ist. Beispielsweise wird eine Präsenz einer Zugangsberechtigungsnachweisvorrichtung detektiert, wenn die Abweichung des die zumindest eine zum Detektieren erfasste physikalische Größe repräsentierende Messwerts von dem Kalibrierungswert einen vorgegebenen Schwellwert überschreitet. Zum Beispiel sind die ersten Kommunikationsmittel 33 eingerichtet, den Messwert mit einem Kalibrierungswert zu vergleichen.

In dem obigen Beispiel, wird zum Beispiel bestimmt, dass eine Zugangsberechtigungsnachweisvorrichtung in der Umgebung der Zugangskontrollvorrichtung 30 präsent ist, wenn der Messwert, der die Stromstärke des Stroms der NFC-Antenne beim Senden des Signals in Schritt 121 repräsentiert, größer als der obere Kalibrierungswert oder kleiner als der untere Kalibrierungswert ist.

Wie oben beschrieben, ist die erste Kommunikationsschnittstelle 33 vorzugsweise eingerichtet, die Schritte 121 bis 123 eigenständig auszuführen und/oder zu steuern, solange sich die Zugangskontrollvorrichtung 30 im Energiesparmodus befindet.

Falls in Schritt 123 bestimmt wird, dass eine Zugangsberechtigungsnachweisvorrichtung in der Umgebung der Zugangskontrollvorrichtung 30 präsent ist, wird das Flussdiagramm 120 mit Schritt 124 fortgesetzt. Andernfalls wird erneut Schritt 121 ausgeführt. Zum Beispiel werden die Schritte 121 bis 123 in regelmäßigen Zeitabständen solange wiederholt, bis in Schritt 123 bestimmt wird, dass eine Zugangsberechtigungsnachweisvorrichtung in der Umgebung der Zugangskontrollvorrichtung 30 präsent ist. Zum Beispiel werden die Schritte 121 bis 123 alle 375 ms wiederholt.

In einem Schritt 124 wird ein Wechsels des Betriebsmodus der Zugangskontrollvorrichtung aus einem Energiesparmodus in einen Aktivmodus bewirkt.

Zum Beispiel erzeugt die erste Kommunikationsschnittstelle 33 in Schritt 124 eine Information über die Präsenz der Zugangsberechtigungsnachweisvorrichtung in der Umgebung der Zugangskontrollvorrichtung 30. Zum Beispiel ist der Prozessor 31 eingerichtet, einen Wechsel der Zugangskontrollvorrichtung 30 aus dem Energiesparmodus in den Aktivmodus zu steuern (z.B. durch entsprechende Steuersignale), wenn der Prozessor 31 eine Information über eine Präsenz einer Zugangsberechtigungsnachweisvorrichtung in der Umgebung der Zugangskontrollvorrichtung erhält.

Zum Beispiel ist die erste Kommunikationsschnittstelle 33 eingerichtet, aus dem Detektionsmodus in den Aktivmodus zu wechseln, wenn bestimmt wird, dass eine Zugangsberechtigungsnachweisvorrichtung in der Umgebung der Zugangskontrollvorrichtung 30 präsent ist. Zum Beispiel speichern die ersten Kommunikationsmittel 33 eine Information über den Betriebsmodus der ersten Kommunikationsmittel 33 in einem Register. Zum Beispiel fragt der Prozessor 31 das Register (und somit eine Information über die Präsenz der Zugangsberechtigungsnachweisvorrichtung in der Umgebung der Zugangskontrollvorrichtung) in regelmäßigen Zeitabständen ab, wenn die Zugangskontrollvorrichtung 30 im Energiesparmodus ist. Zum Beispiel steuert der Prozessor 31 einen Wechsel der übrigen Komponenten und somit der Zugangskontrollvorrichtung 30 aus dem Energiesparmodus in den Aktivmodus zu steuern (z.B. durch entsprechende Steuersignale), wenn eine Abfrage des Registers ergibt, dass die ersten Kommunikationsmittel 33 im Aktivmodus sind.

Alternativ ist beispielsweise denkbar, dass die erste Kommunikationsschnittstelle 33 eine Information über eine Präsenz einer Zugangsberechtigungsnachweisvorrichtung in der Umgebung der Zugangskontrollvorrichtung 30 und/oder ein Aufwachsignal an den Prozessor 31 sendet. Zum Beispiel steuert der Prozessor 31 einen Wechsel der Komponenten und somit der Zugangskontrollvorrichtung 30 aus dem Energiesparmodus in den Aktivmodus (z.B. durch entsprechende Steuersignale), wenn er die Information über eine Präsenz einer Zugangsberechtigungsnachweisvorrichtung in der Umgebung der Zugangskontrollvorrichtung 30 und/oder ein Aufwachsignal empfängt.

Dies ist beispielsweise vorteilhaft, da nur die erste Kommunikationsschnittstelle 33 für das Detektieren verwendet wird und der Prozessor 31 überwacht, ob eine Präsenz einer Zugangsberechtigungsnachweisvorrichtung in der Umgebung der Zugangskontrollvorrichtung 30 detektiert wurde. Die übrigen Komponenten der Zugangskontrollvorrichtung 30 können somit im Energiesparmodus vollständig deaktiviert sein.

Wenn die Zugangskontrollvorrichtung 30 im Aktivmodus ist, kann die Zugangskontrollvorrichtung 30 beispielsweise Zugang zu dem ersten Aufnahmefach und/oder dem zweiten Aufnahmefach des Paketkastens 1 gewähren. Zum Beispiel können die Kommunikationsschnittstellen 33, 34 im Aktivmodus mit einer Zugangsberechtigungsnachweisvorrichtung drahtlos kommunizieren und zum Beispiel eine Zugangsberechtigungsinformation von einer Zugangsberechtigungsnachweisvorrichtung erhalten. Zum Beispiel ist der Prozessor 31 der Zugangskontrollvorrichtung 30 im Aktivmodus eingerichtet, zumindest teilweise in Abhängigkeit einer von einer Zugangsberechtigungsnachweisvorrichtung erhaltenen Zugangsberechtigungsinformation zu entscheiden, ob Zugang zu dem ersten Aufnahmefach oder dem ersten und dem zweiten Aufnahmefach des Paketkastens 1 gewährt werden darf. Zum Beispiel ist der Prozessor 31 eingerichtet, die Antriebsteuerung 35 derart anzusteuern, wenn Zugang zu dem ersten Aufnahmefach gewährt werden darf, dass der Antrieb 14 die Stange 13 in die erste Verstellposition dreht, so dass der Schließhaken 11 des ersten Verriegelungsmoduls 9 ein Riegelelement der Tür 6 freigibt und die Tür 6 geöffnet werden kann. Zum Beispiel ist der Prozessor 31 eingerichtet, die Antriebsteuerung 35 derart anzusteuern, wenn Zugang zu dem ersten und dem zweiten Aufnahmefach gewährt werden darf, dass der Antrieb 14 die Stange 13 in die zweite Verstellposition dreht, so dass der Schließhaken 11 des ersten Verriegelungsmoduls 9 ein Riegelelement der Tür 6 freigibt und die Tür 6 geöffnet werden kann und dass der Schließhaken 11 des zweiten Verriegelungsmoduls 10 ein Riegelelement der Tür 7 freigibt und die Tür 7 geöffnet werden kann. Durch einen Türöffnungssensor kann beispielsweise überwacht werden, ob die Tür geöffnet ist und/oder oder geschlossen ist.

In einem optionalen Schritt 125 wird die Aktivzeit seit zumindest ein von der Zugangskontrollvorrichtung erfasstes Ereignis stattgefunden hat gemessen. Zum Beispiel misst der Prozessor 31 die Aktivzeit.

Das Messen der Aktivzeit wird zum Beispiel gestartet, wenn in Schritt 123 bestimmt wird, dass eine Zugangsberechtigungsnachweisvorrichtung in der Umgebung der Zugangskontrollvorrichtung 30 präsent ist und die Zugangskontrollvorrichtung in den Aktivmodus wechselt. Zum Beispiel kann vorgesehen sein, dass die gemessene Aktivzeit jedes Mal, wenn ein Ereignis von der Zugangskontrollvorrichtung erfasst wird, zurückgesetzt wird. Dabei kann jedes Ereignis, das beispielsweise auf eine Aktivität eines Benutzers schließen lässt und von der Zugangskontrollvorrichtung erfassbar ist, zu einem Zurücksetzen der Aktivzeit führen.

Wie oben beschrieben kann ein von der Zugangskontrollvorrichtung 30 erfasstes Ereignis beispielsweise ein Detektieren einer Präsenz der Zugangsberechtigungsnachweisvorrichtung in der Umgebung der Zugangskontrollmittel, das Empfangen von Zugangsberechtigungsinformation von einer Zugangsberechtigungsnachweisvorrichtung, das Bewirken des Entriegelns zumindest einer Tür und/oder das zumindest Öffnen einer Tür sein. Die Ereignisse können zum Beispiel durch die Sensoren 36, den Prozessor 31, die erste Kommunikationsschnittstelle 33 und/oder die zweite Kommunikationsschnittstelle 34 erfasst werden.

In einem optionalen Schritt 126 wird (z.B. durch den Prozessor 31) bestimmt, ob die gemessene Aktivzeit größer als ein vorgegebener Aktivzeitschwellwert ist. Der vorgegebene Aktivzeitschwellwert beträgt zum Beispiel weniger als 1 Stunde, vorzugsweise weniger als 30 Minuten, besonders vorzugsweise weniger als 16 Minuten. Wenn der vorgegebene Aktivzeitschwellwert überschritten ist, kann beispielsweise davon ausgegangen werden, dass zumindest mit hoher Wahrscheinlichkeit kein Benutzer (z.B. weder ein Zusteller noch ein Nutzer) den Paketkasten 1 derzeit benutzen möchte. In diesem Fall kann es daher vorteilhaft sein, um Energie zu sparen, den Wechsel der Zugangskontrollvorrichtung aus dem Aktivmodus in den Energiesparmodus zu bewirken (Schritt 128).

Falls in Schritt 126 bestimmt wird, dass die gemessene Aktivzeit größer als ein vorgegebener Aktivzeitschwellwert ist, wird das Flussdiagramm 120 mit Schritt 127 fortgesetzt. Andernfalls wird das Messen der Aktivzeit gemäß Schritt 125 fortgesetzt.

In einem optionalen Schritt 127 wird die erste Kommunikationsschnittstelle 33 für das Detektieren einer Präsenz einer Zugangsberechtigungsnachweisvorrichtung in der Umgebung der Zugangskontrollvorrichtung kalibriert. Zum Beispiel wird das Kalibrieren von der ersten Kommunikationsschnittstelle 33 ausgeführt.

Zum Beispiel wird in Schritt 127 die physikalische Größe erfasst. In dem obigen Beispiel erfasst beispielsweise die erste Kommunikationsschnittstelle 33 zum Kalibrieren in Schritt 127 eine Stromstärke eines Stroms der NFC-Antenne beim Senden des Signals (z.B. die Stromstärke des Treiberstroms der Antenne beim Senden des Signals).

Ferner wird in Schritt 127 der zumindest eine Kalibrierungswert zumindest teilweise in Abhängigkeit der zum Kalibrieren erfassten physikalischen Größe bestimmt. Zum Beispiel kann das Bestimmen des zumindest einen Kalibrierungswerts das Bestimmen eines oberen Kalibrierungswerts und eines unteren Kalibrierungswerts umfassen (z.B. durch Additionen bzw. Subtraktion eines Sicherheitswerts von einem die in Schritt 127 erfasste physikalische Größe repräsentierenden Messwert).

Wie oben beschrieben, wird angenommen, dass die Wahrscheinlichkeit, dass sich eine Zugangsberechtigungsnachweisvorrichtung in der Umgebung der Zugangskontrollvorrichtung 30 befindet, gering ist, wenn die Zugangskontrollvorrichtung 30 aus dem Aktivmodus in den Energiesparmodus wechselt. Die Ausführung des Schritts 127 vor dem Schritt 128 ist daher ein vorteilhafter Zeitpunkt. Es ist aber auch denkbar, dass Schritt 127 nach Schritt 128 oder während Schritt 128 ausgeführt wird.

In einem optionalen Schritt 128 wird ein Wechsel des Betriebsmodus der Zugangskontrollvorrichtung 30 aus dem Aktivmodus in den Energiesparmodus bewirkt. Dies ist beispielsweise vorteilhaft, um den Energieverbrauch der Zugangskontrollvorrichtung zu reduzieren. Zum Beispiel steuert der Prozessor den Wechsel der Zugangskontrollvorrichtung 30 und deren Komponenten in den Energiesparmodus. Beispielsweise wechselt die ersten Kommunikationsschnittstelle 33 in den Detektionsmodus, wenn die Zugangskontrollvorrichtung in den Energiesparmodus wechselt.

Nach dem Wechsel des Betriebsmodus der Zugangskontrollvorrichtung 30 startet das Flussdiagramm 120 mit Schritt 121 erneut.

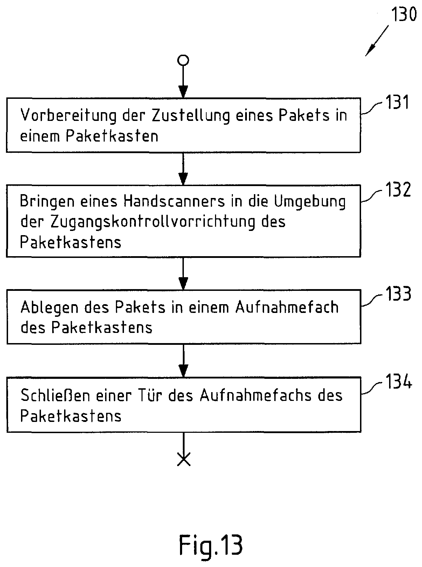

Fig. 13 ist ein Flussdiagramm 130, das die Schritte eines Beispiels für eine erfindungsgemäße Verwendung darstellt. Die im Flussdiagramm 130 dargestellten Schritte werden von einem Zusteller des Paketkastens 1 ausgeführt und im Folgenden aus dessen Perspektive beschrieben. In dem in Fig. 13 dargestellten Beispiel, möchte der Zusteller die Tür 6 des Paketkastens 1 öffnen, um ein Paket im ersten Aufnahmefach ablegen und somit zustellen zu können. Im diesem Beispiel wird davon ausgegangen, dass der Zusteller als Zugangsberechtigungsnachweisvorrichtung einen Handscanner (z.B. Honeywell's LXE Tecton MX7) verwendet.

In einem Schritt 131 bereitet der Zusteller die Zustellung des Pakets in dem Paketkasten 1 vor.

Zum Beispiel scannt der Zusteller in Schritt 131 einen auf dem Paket aufgebrachten Barcode mit dem Handscanner. Dadurch kann der Handscanner das Paket beispielsweise identifizieren und die dem Paket zugeordneten Sendungsinformationen abrufen. Die Sendungsinformationen enthalten beispielsweise Informationen über eine mögliche Zustellung des Pakets in einen Paketkasten des Empfängers. Zum Beispiel werden dem Zusteller ein oder mehrere Paketkästen, in die das Paket zugestellt werden darf, auf dem Handscanner angezeigt.

Zum Beispiel bestätigt der Zusteller in Schritt 131 den Paketkasten 1, in dem er das Paket ablegen möchte, oder wählt den Paketkasten 1, in den er das Paket ablegen möchte, aus den angezeigten Paketkästen aus. Dadurch kann beispielsweise sichergestellt werden, dass der Zusteller das Paket auch in einem dem Paket oder dem Empfänger des Pakets zugeordneten Paketkasten ablegt und die Suche aus vielen Datensätzen wird vereinfacht. Ferner kann der Handscanner beispielsweise anhand des bestätigten oder ausgewählten Paketkastens 1 eine Zugangsberechtigungsinformation, die zum Zugang zum ersten Aufnahmefach des Paketkastens 1 berechtigt, abrufen oder erzeugen.

In einem Schritt 132 bringt der Zusteller den Handscanner in die Umgebung der Zugangskontrollvorrichtung 30 des Paketkastens 1.

Zum Beispiel hält der Zusteller den Handscanner derart in die Umgebung der Zugangskontrollvorrichtung 30, dass die Präsenz des Handscanners in der Umgebung der Zugangskontrollvorrichtung 30 durch die erste Kommunikationsschnittstelle 33 detektierbar ist.

Wie oben beispielsweise in Bezug auf die Schritte 121 bis 124 (siehe Fig. 12) beschrieben, wechselt die Zugangskontrollvorrichtung 30 beispielsweise aus dem Energiesparmodus in den Aktivmodus, wenn die erste Kommunikationsschnittstelle 33 die Präsenz des Handscanners in der Umgebung der Zugangskontrollvorrichtung 30 detektieren. Anschließend kommuniziert der Handscanner die Zugangsberechtigungsinformation beispielsweise an die zweite Kommunikationsschnittstelle 34. Zum Beispiel wird die Tür 6 des Paketkastens 1 dann, wie oben beschrieben, entriegelt und geöffnet, wenn die Zugangsberechtigungsinformation zum Zugang zum ersten Aufnahmefach des Paketkastens berechtigen. Der Zusteller erhält von dem Handscanner beispielsweise eine entsprechende Rückmeldung (z.B. wird eine Meldung angezeigt, dass Zugang gewährt wird).

Alleine dadurch, dass der Zusteller den Handscanner in die Umgebung der Zugangskontrollvorrichtung 30 des Paketkastens 1 bringt, kann er somit das Aufwachen der Zugangskontrollvorrichtung (also auch eine Änderung des Betriebsmodus der zweiten Kommunikationsschnittstelle) und das Entriegeln sowie Öffnen der Tür 6 des Paketbriefkastens 1 veranlassen.

In einem Schritt 133 legt der Zusteller das Paket in dem ersten Aufnahmefach des Paketkastens 1 ab.

In einem Schritt 134 schließt der Zusteller die Tür 6 des ersten Aufnahmefachs des Paketkastens 1. Wie oben beschrieben, wird die Tür 6 dadurch beispielsweise automatisch aufgrund einer Fallenfunktion verriegelt.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablauf-diagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, umfassend:
- Detektieren (111, 121 -123) einer Präsenz einer Zugangsberechtigungsnachweisvorrichtung in einer Umgebung einer Zugangskontrollvorrichtung (30) durch erste Kommunikationsmittel (33) der Zugangskontrollvorrichtung, wobei durch die Präsenz der Zugangsberechtigungsnachweisvorrichtung in der Umgebung der Zugangskontrollvorrichtung (30) zumindest eine durch die ersten Kommunikationsmittel (33) erfassbare physikalische Größe verändert wird, wobei die physikalische Größe alleine durch das Einbringen der Zugangsberechtigungsnachweisvorrichtung in die Umgebung der Zugangskontrollvorrichtung (30) verändert wird, wobei die physikalische Größe und/oder eine Veränderung der physikalischen Größe durch die ersten Kommunikationsmittel (33) zum Detektieren der Präsenz der Zugangsberechtigungsnachweisvorrichtung in der Umgebung der Zugangskontrollvorrichtung erfasst wird,
- Bewirken (112, 123 - 124), wenn die Präsenz der Zugangsberechtigungsnachweisvorrichtung in der Umgebung der Zugangskontrollvorrichtung detektiert wird, einer Änderung eines Betriebsmodus zweiter Kommunikationsmittel (34) der Zugangskontrollvorrichtung,
wobei die ersten Kommunikationsmittel (33) eingerichtet sind, gemäß einer ersten Kommunikationstechnik drahtlos zu kommunizieren und eine Zugangsberechtigungsinformation von der Zugangsberechtigungsnachweisvorrichtung zu erhalten, und wobei die zweiten Kommunikationsmittel (34) eingerichtet sind, gemäß einer zweiten von der ersten verschiedenen Kommunikationstechnik drahtlos zu kommunizieren und eine Zugangsberechtigungsinformation von der Zugangsberechtigungsnachweisvorrichtung zu erhalten, wobei die Zugangsberechtigungsnachweisvorrichtung die Zugangsberechtigungsinformation an die ersten Kommunikationsmittel gemäß der ersten Kommunikationstechnik und an die zweiten Kommunikationsmittel gemäß der zweiten Kommunikationstechnik kommuniziert,
- Erhalten von einer Zugangsberechtigungsinformation von der Zugangsberechtigungsnachweisvorrichtung durch die ersten Kommunikationsmittel (33) und die zweiten Kommunikationsmittel (34),
- Entscheiden, ob Zugang gewährt werden darf, zumindest teilweise in Abhängigkeit der erhaltenen Zugangsberechtigungsinformation, und
- Bewirken des Entriegelns einer oder mehrerer Türen (6, 7) einer Aufnahmevorrichtung (1), wenn entschieden wurde, dass Zugang gewährt werden darf.

2. Verfahren nach Anspruch 1, wobei die erste drahtlose Kommunikationstechnik und die zweite drahtlose Kommunikationstechnik Kommunikationstechniken gemäß einem der folgenden Kommunikationsstandards sind: RFID-Spezifikation, NFC-Spezifikation oder Bluetooth-Spezifikation.

3. Verfahren nach einem der Ansprüche 1 bis 2, das Verfahren ferner umfassend:
- Kalibrieren (127) der ersten Kommunikationsmittel (33) für das Detektieren einer Präsenz einer Zugangsberechtigungsnachweisvorrichtung in der Umgebung der Zugangskontrollvorrichtung (30), wobei die ersten Kommunikationsmittel (33) die physikalische Größe zum Kalibrieren der ersten Kommunikationsmittel (33) in einem Zustand, in dem die Zugangsberechtigungsnachweisvorrichtung in der Umgebung der Zugangskontrollvorrichtung nicht präsent ist, erfassen.

4. Verfahren nach Anspruch 3, wobei die zumindest eine physikalische Größe eine Stromstärke eines Stroms einer Antenne der ersten Kommunikationsmittel (33) beim Senden eines Signals ist.

5. Verfahren nach Anspruch 3 oder 4, das Verfahren umfassend:
- Erfassen (121) der zumindest einen physikalischen Größe zum Detektieren einer Präsenz einer Zugangsberechtigungsnachweisvorrichtung in der Umgebung der Zugangskontrollvorrichtung (30), und
- Vergleichen (122) eines die zumindest eine zum Detektieren erfasste physikalische Größe repräsentierenden Messwerts mit zumindest einem Kalibrierungswert.

6. Verfahren nach einem der Ansprüche 3 bis 5, das Kalibrieren (127) umfassend:
- Erfassen der zumindest einen physikalischen Größe durch die ersten Kommunikationsmittel (33) zum Kalibrieren der ersten Kommunikationsmittel für das Detektieren, und
- Bestimmen des zumindest einen Kalibrierungswerts zumindest teilweise in Abhängigkeit der zum Kalibrieren erfassten physikalischen Größe.

7. Verfahren nach einem der Ansprüche 1 bis 6, das Verfahren ferner umfassend:
- Erzeugen, wenn die Präsenz der Zugangsberechtigungsnachweisvorrichtung in der Umgebung der Zugangskontrollvorrichtung (30) detektiert wird, einer Information über die Präsenz der Zugangsberechtigungsnachweisvorrichtung in der Umgebung der Zugangskontrollvorrichtung (30), und
- Speichern der Information in einem Speicher der ersten Kommunikationsmittel (33) und/oder Übermitteln der Information an Steuermittel (31) der Zugangskontrollvorrichtung (30) und/oder an die zweiten Kommunikationsmittel (34).

8. Verfahren nach einem der Ansprüche 1 bis 7, das Verfahren ferner umfassend:
- Bewirken eines Wechsels (128) des Betriebsmodus der ersten Kommunikationsmittel (33), der zweiten Kommunikationsmittel (34) und/oder der Zugangskontrollvorrichtung (30) aus einem Energiesparmodus in einen Aktivmodus, wenn die Präsenz der Zugangsberechtigungsnachweisvorrichtung in der Umgebung der Zugangskontrollvorrichtung (30) detektiert wird.

9. Verfahren nach Anspruch 8, das Verfahren ferner umfassend:
- Messen der Aktivzeit (125) seit zumindest ein von der Zugangskontrollvorrichtung (30) erfasstes Ereignis stattgefunden hat, und
- Bewirken, wenn die gemessene Aktivzeit einen vorgegebenen Aktivzeitschwellwert überschreitet, eines Wechsels des Betriebsmodus der ersten Kommunikationsmittel, der zweiten Kommunikationsmittel und/oder der Zugangskontrollvorrichtung aus dem Aktivmodus in den Energiesparmodus.

10. Verfahren nach einem der Ansprüche 1 bis 9, wobei die ersten Kommunikationsmittel (33) beim Detektieren in einem Detektionsmodus sind, und wobei die zweiten Kommunikationsmittel (34) beim Detektieren in einem Energiesparmodus sind.

11. Computerprogramm, umfassend Programmanweisungen, die einen Prozessor (31) zur Ausführung und/oder Steuerung des Verfahrens gemäß einem der Ansprüche 1 bis 10 veranlassen, wenn das Computerprogramm auf dem Prozessor (31) läuft.

12. Zugangskontrollvorrichtung (30), umfassend:
- Mittel (31 - 38) eingerichtet zur Ausführung des Verfahrens nach einem der Ansprüche 1 bis 10 oder umfassend jeweilige Mittel (31 - 38) zur Ausführung der Schritte des Verfahrens nach einem der Ansprüche 1 bis 10.

13. Aufnahmevorrichtung (1), umfassend:
- ein Gehäuse (2),
- zumindest eine Tür (6, 7) zum Verschließen zumindest einer Gehäuseöffnung (4, 5),
- ein Verriegelungsmittel (3), das eingerichtet ist, die zumindest eine Tür (6, 7) zu verriegeln und zu entriegeln, und
- eine Zugangskontrollvorrichtung (30) nach Anspruch 12.

## Claims

1. Method comprising:
- detecting (111, 121-123) a presence of an access authorisation proofing device in the vicinity of an access control device (30) by means of first communication means (33) of the access control device, wherein the presence of the access authorisation proofing device in the vicinity of the access control device (30) causes at least one physical quantity detectable by the first communication means (33) to be changed, wherein the physical quantity is changed solely by the introduction of the access authorisation proofing device into the environment of the access control device (30), wherein the physical quantity and/or a change in the physical quantity is detected by the first communication means (33) for detecting the presence of the access authorisation proofing device in the environment of the access control device,
- causing (112, 123 - 124), when the presence of the access authorisation proofing device is detected in the vicinity of the access control device, a change in an operating mode of second communication means (34) of the access control device, wherein the first communication means (33) are configured to communicate wirelessly according to a first communication technique and to receive access authorisation proofing information from the access authorisation proofing device, and wherein the second communication means (34) are arranged to communicate wirelessly according to a second communication technique different from the first communication technique and to receive access authorisation proofing information from the access authorisation proofing device, wherein the access authorisation proofing device communicates the access authorisation proofing information to the first communication means according to the first communication technique and to the second communication means according to the second communication technique,
- obtaining access authorisation proofing information from the access authorisation proofing device by the first communication means (33) and the second communication means (34),
- deciding whether access may be granted, at least in part depending on the received access authorisation proofing information, and
- causing one or more doors (6, 7) of a receiving device (1) to be unlocked if it has been decided that access may be granted.

2. Method according to claim 1, wherein the first wireless communication technology and the second wireless communication technology are communication technologies according to one of the following communication standards: RFID specification, NFC specification or Bluetooth specification.

3. Method according to one of claims 1 to 2, the method further comprising:
- calibrating (127) the first communication means (33) for detecting a presence of an access authorisation proofing device in the vicinity of the access control device (30), wherein the first communication means (33) detects the physical size for calibrating the first communication means (33) in a state in which the access authorisation proofing device is not present in the vicinity of the access control device.

4. Method according to claim 3, wherein the at least one physical quantity is a current strength of a current of an antenna of the first communication means (33) when transmitting a signal.

5. Method according to claim 3 or 4, the method comprising:
- detecting (121) the at least one physical quantity to detect the presence of an access authorisation proofing device in the vicinity of the access control device (30), and
- comparing (122) a measured value representing the at least one physical quantity detected with at least one calibration value.

6. Method according to one of claims 3 to 5, the calibrating (127) comprising:
- detecting the at least one physical quantity by the first communication means (33) for calibrating the first communication means for detection, and
- determining the at least one calibration value at least partially as a function of the physical quantity detected for calibration.

7. Method according to one of claims 1 to 6, the method further comprising:
- generating, when the presence of the access authorisation proofing device is detected in the vicinity of the access control device (30), information about the presence of the access authorisation proofing device in the vicinity of the access control device (30), and
- storing the information in a memory of the first communication means (33) and/or transmitting the information to control means (31) of the access control device (30) and/or to the second communication means (34).

8. Method according to one of claims 1 to 7, the method further comprising:
- causing a change (128) in the operating mode of the first communication means (33), the second communication means (34) and/or the access control device (30) from an energy-saving mode to an active mode when the presence of the access authorisation proofing device is detected in the vicinity of the access control device (30).

9. Method according to claim 8, the method further comprising:
- measuring the active time (125) since at least one event detected by the access control device (30) has occurred, and
- causing, when the measured active time exceeds a predetermined active time threshold, a change in the operating mode of the first communication means, the second communication means and/or the access control device from the active mode to the energy-saving mode.

10. Method according to one of claims 1 to 9, wherein the first communication means (33) are in a detection mode when detecting, and wherein the second communication means (34) are in an energy-saving mode when detecting.

11. Computer program comprising program instructions that cause a processor (31) to perform and/or control the method according to one of claims 1 to 10 when the computer program runs on the processor (31).

12. Access control device (30) comprising:
- means (31-38) configured to perform the method according to any one of claims 1 to 10, or comprising respective means (31-38) for performing the steps of the method according to any one of claims 1 to 10.

13. Recording device (1) comprising:
- a housing (2),
- at least one door (6, 7) for closing at least one housing opening (4, 5),
- a locking means (3) which is designed to lock and unlock the at least one door (6, 7), and
- an access control device (30) according to claim 12.

## Revendications

1. Méthode comprenant:
- détecter (111, 121-123) une présence d'un dispositif de vérification d'autorisation d'accès dans un environnement d'un dispositif de contrôle d'accès (30) par des premiers moyens de communication (33) du dispositif de contrôle d'accès, où la présence du dispositif de vérification d'autorisation d'accès dans l'environnement du dispositif de contrôle d'accès (30) modifie au moins une grandeur physique détectable par les premiers moyens de communication (33), où la grandeur physique est modifiée uniquement par l'introduction du dispositif de vérification d'autorisation d'accès dans l'environnement du dispositif de contrôle d'accès (30), où la grandeur physique et/ou une modification de la grandeur physique est détectée par les premiers moyens de communication (33) pour détecter la présence du dispositif de vérification d'autorisation d'accès dans l'environnement du dispositif de contrôle d'accès,
- effectuer (112, 123 - 124), lorsque la présence du dispositif de vérification d'autorisation d'accès est détectée dans l'environnement du dispositif de contrôle d'accès, une modification d'un mode de fonctionnement de seconds moyens de communication (34) du dispositif de contrôle d'accès,
où les premiers moyens de communication (33) sont configurés pour communiquer sans fil selon une première technique de communication et pour recevoir des informations de vérification d'autorisation d'accès provenant du dispositif de vérification d'autorisation d'accès, et où les seconds moyens de communication (34) sont configurés pour communiquer sans fil selon une deuxième technique de communication différente de la première et pour recevoir des informations de vérification d'autorisation d'accès provenant du dispositif de vérification d'autorisation d'accès, où le dispositif de vérification d'autorisation d'accès communiquant les informations de vérification d'autorisation d'accès aux premiers moyens de communication selon la première technique de communication et aux seconds moyens de communication selon la deuxième technique de communication,
- obtenir des informations de vérification d'autorisation d'accès provenant du dispositif de vérification d'autorisation d'accès par les premiers moyens de communication (33) et les seconds moyens de communication (34),
- décider si accès peut être accordé, au moins en partie en fonction des informations de vérification d'autorisation d'accès reçues, et
- effectuer déverrouiller une ou plusieurs portes (6, 7) d'un dispositif de réception (1) lorsqu'il a été décidé que l'accès peut être accordé.

2. Méthode selon la revendication 1, où la première technique de communication sans fil et la deuxième technique de communication sans fil sont des techniques de communication conformes à l'une des normes de communication suivantes : spécification RFID, spécification NFC ou spécification Bluetooth.

3. Méthode selon l'une des revendications 1 à 2, la méthode comprenant en outre :
- calibrer (127) le premier moyen de communication (33) pour détecter la présence d'un dispositif de vérification d'autorisation d'accès dans l'environnement du dispositif de contrôle d'accès (30), où les premiers moyens de communication (33) détectent la grandeur physique pour calibrer les premiers moyens de communication (33) dans un état dans lequel le dispositif de vérification d'autorisation d'accès n'est pas présent dans l'environnement du dispositif de contrôle d'accès.

4. Méthode selon la revendication 3, où l'au moins une grandeur physique est une intensité de courant d'une antenne des premiers moyens de communication (33) lors de l'émission d'un signal.

5. Méthode selon la revendication 3 ou 4, la méthode comprenant:
- détecter (121) au moins une grandeur physique pour détecter une présence d'un dispositif de vérification d'autorisation d'accès dans l'environnement du dispositif de contrôle d'accès (30), et
- comparer (122) une valeur mesurée représentant l'au moins une grandeur physique détectée avec au moins une valeur d'étalonnage.

6. Méthode selon l'une des revendications 3 à 5, l'étalonnage (127) comprenant:
- détecter l'au moins une grandeur physique par les premiers moyens de communication (33) pour calibrer les premiers moyens de communication pour la détection, et
- déterminer l'au moins une valeur d'étalonnage au moins en partie en fonction de la grandeur physique détectée pour l'étalonnage.

7. Méthode selon l'une des revendications 1 à 6, la méthode comprenant en outre :
- générer, lorsque la présence du dispositif de vérification d'autorisation d'accès est détectée dans l'environnement du dispositif de contrôle d'accès (30), une information sur la présence du dispositif de vérification d'autorisation d'accès dans l'environnement du dispositif de contrôle d'accès (30), et
- stocker les informations dans une mémoire du premier moyen de communication (33) et/ou transmettre les informations au moyen de commande (31) du dispositif de contrôle d'accès (30) et/ou au deuxième moyen de communication (34).

8. Méthode selon l'une des revendications 1 à 7, la méthode comprenant en outre :
- provoquer un changement (128) du mode de fonctionnement du premier moyen de communication (33), du deuxième moyen de communication (34) et/ou du dispositif de contrôle d'accès (30) d'un mode d'économie d'énergie à un mode actif lorsque la présence du dispositif de vérification d'autorisation d'accès est détectée dans l'environnement du dispositif de contrôle d'accès (30).

9. Méthode selon la revendication 8, la méthode comprenant en outre :
- mesurer du temps d'activité (125) depuis qu'au moins un événement détecté par le dispositif de contrôle d'accès (30) s'est produit, et
- lorsque le temps d'activité mesuré dépasse un seuil de temps d'activité prédéfini, provoquer un changement du mode de fonctionnement du premier moyen de communication, du deuxième moyen de communication et/ou du dispositif de contrôle d'accès, qui passe du mode actif au mode d'économie d'énergie.

10. Méthode selon l'une des revendications 1 à 9, où les premiers moyens de communication (33) sont en mode de détection lors de la détection, et où les seconds moyens de communication (34) sont en mode d'économie d'énergie lors de la détection.

11. Programme informatique comprenant des instructions de programme qui amènent un processeur (31) à exécuter et/ou à commander la méthode selon l'une des revendications 1 à 10 lorsque le programme informatique est exécuté sur le processeur (31).

12. Dispositif de contrôle d'accès (30) comprenant :
- des moyens (31 à 38) configurés pour exécuter la méthode selon l'une des revendications 1 à 10 ou comprenant des moyens respectifs (31 à 38) pour exécuter les étapes de la méthode selon l'une des revendications 1 à 10.

13. Dispositif de réception (1) comprenant :
- un boîtier (2),
- au moins une porte (6, 7) pour fermer au moins une ouverture (4, 5) du boîtier,
- un moyen de verrouillage (3) qui est configuré pour verrouiller et déverrouiller l'au moins une porte (6, 7), et
- un dispositif de contrôle d'accès (30) selon la revendication 12.
